# EUROPÄISCHE PATENTSCHRIFT

(11) **EP 3 131 516 B1**
(45) Veröffentlichungstag und Bekanntmachung des Hinweises auf die Patenterteilung: **22.05.2019**
(21) Anmeldenummer: 15716514.3
(22) Anmeldetag: 13.04.2015
(51) Int. Cl.: A61H 1/02

(54) **REHABILITATIONSMECHANISMUS FÜR BETTPFLICHTIGE PATIENTEN SOWIE EIN DEN REHABILITATIONSMECHANISMUS UMFASSENDES BETT**
REHABILITATION MECHANISM FOR PATIENTS CONFINED TO BED AND BED COMPRISING THE REHABILITATION MECHANISM
MÉCANISME DE RÉÉDUCATION POUR LES PATIENTS ASTREINTS À LA POSITION COUCHÉE ET LIT COMPRENANT CE MÉCANISME DE RÉÉDUCATION

(30) Priorität: 13.04.2014 DE 102014105250
(43) Veröffentlichungstag der Anmeldung: 22.02.2017
(73) Patentinhaber: ReActive Robotics GmbH, 80687 München (DE)
(72) Erfinder: KÖNIG, Alexander, 80636 München (DE)
(74) Vertreter: Heilein, Ernst - Peter
(86) Internationale Anmeldenummer: PCT/EP2015/057984
(87) Internationale Veröffentlichungsnummer: WO 2015/158664

(56) Entgegenhaltungen:
- WO-A1-00/61059
- DE-A1- 4 113 135
- US-A- 4 520 827
- US-A- 4 586 495
- US-A- 4 621 620
- US-A- 4 665 899
- US-A- 5 239 987
- US-A1- 2004 172 097

## Beschreibung

Die vorliegende Erfindung betrifft einen Rehabilitationsmechanismus für bettpflichtige Patienten sowie ein den Rehabilitationsmechanismus umfassendes Bett, insbesondere Pflegebett, Krankenbett, Spitalbett oder Intensivbett.

Bei Menschen, welche beispielsweise an einer Krankheit oder den Folgen eines Unfalls leiden oder aus anderen Gründen für länger als die gewöhnlichen Nachtruhen als Patient an ein Bett "gefesselt" sind (im Folgenden als bettpflichtige Patienten bezeichnet), treten häufig Einschränkungen der Aktivität auf, welche dazu führen, dass solche Menschen nach Verlassen des Bettes schlecht bis gar nicht am sozialen Leben teilnehmen können, d.h. nicht oder nur bedingt arbeiten können und auf Hilfe im alltäglichen Leben angewiesen sind.

Durch Rehabilitation kann der Patient einen Teil seiner Aktivität wiedererlangen. In der Medizin werden unter Rehabilitation der Einsatz und die Wirkung von Maßnahmen verstanden, die darauf abzielen, die körperlichen, psychischen und sozialen Folgen einer Behinderung bzw. Aktivitätseinschränkung (engl. früher: *Disability,* jetzt: *Activity*) und Störung der Teilhabe (früher: *Handicap,* jetzt: *Participation*) am sozialen Leben auf ein Minimum zu beschränken.

Medizinische Rehabilitation ist nachgewiesenermaßen insbesondere für den menschlichen Stütz- und Bewegungsapparat von Bedeutung: werden nämlich Knochen, Gelenke, Muskeln und Sehnen insbesondere der menschlichen Beine (bestehend aus Gesäß, Hüftgelenk, Oberschenkel, Kniegelenk, Unterschenkel und Fuß) nicht regelmäßig bewegt, versteifen sie - die diesbezüglichen, im menschlichen Rückenmark angesiedelten, Lokomotionszentren können verkümmern.

Anders als Menschen, die körperlich und aufgrund einer stabilen Kreislaufsituation in der Lage sind, beispielsweise an einem Laufbandtraining teilzunehmen, ist dieses bettpflichtigen Patienten für gewöhnlich verwehrt. Ursachen können insbesondere orthopädische, intensivmedizinische und/oder neurologische Aktivitätseinschränkungen sein, welche einzeln oder kumulativ angetroffen werden können.

### Rehabilitation orthopädischer Aktivitätseinschränkungen

Die Orthopädie ist das Tätigkeitsfeld des Facharztes für Orthopädie und Unfallchirurgie, das sich mit der Entstehung, Verhütung, Erkennung und Behandlung angeborener oder erworbener Form- oder Funktionsfehler des Stütz- und Bewegungsapparates, also der Knochen, Gelenke, Muskeln und Sehnen, sowie mit der Rehabilitation solcher Patienten befasst.

Orthopädische Behandlungen bedienen sich unter anderem chirurgischer Verfahren wie insbesondere der Prothesenchirurgie (z.B., aber nicht limitiert auf, Hüft- oder Kniegelenksersatz). Nach einem Unfall oder chirurgischen Eingriff ist bettpflichtigen Patienten aufgrund orthopädischer Aktivitätseinschränkungen für gewöhnlich eine vollständige Belastung der Knochen, Gelenke, Muskeln und Sehnen eines oder beider Beine mit dem eigenen Körpergewicht nicht möglich.

Um dennoch ein Versteifen der Beine zu vermeiden ist beispielsweise aus der WO 00/45897 A1 eine Im-Bett-Übungsmaschine bekannt geworden, welche endseitig an ein Pflege- oder Krankenbett herangeschoben in liegender Position die Durchführung von zyklischen Bein-Bewegungen gestattet. Die bekannte Im-Bett-Übungsmaschine gestattet jedoch insbesondere keine Übungen in einer vertikalisierten Position. Damit aber die Füße ganz oder teilweise mit dem Druck des eigenen Körpergewichts belastet werden, was den Heilungsprozess, z.B. nach Gelenkersatz oder Knochenbruch, beschleunigen kann, ist es notwendig, den bettpflichtigen Patienten ganz oder teilweise in eine vertikalisierte Lage bringen zu können.

Diesem Aspekt trägt beispielsweise die aus der WO 00/61059 A1 bekannt gewordene Vorrichtung für eine Lokomotionstherapie zur Rehabilitation von para- und hemiparetischen Patienten, welche einen in der Höhe und Neigung verstellbaren Stehtisch, einen Befestigungsgurt mit Halterungen am Stehtisch für den Patienten, sowie einen Antriebsmechanismus für die Beinbewegung des Patienten, bestehend aus einem Knieteil und einem Fußteil umfasst, Rechnung. Das Ziel dieser Vorrichtung ist es, einen sogenannten 'aktiven Stehtisch' (Kipptisch) zu schaffen, der die Bewegung der Beine von querschnittgelähmten Patienten in einer dem Gehen ähnlichen, physiologischen Art und Weise ermöglicht, ohne die Notwendigkeit, den Patienten aufrichten zu müssen. Problematisch dabei ist, dass dieser Stehtisch oder dazu vergleichbare bekannte Vorrichtungen gewöhnlich in einem separaten Trainingsraum stehen, in jedem Fall aber eine Umlagerung des Patienten vom Bett auf die jeweilige Rehabilitationsvorrichtung erfordern. Dies ist zumindest bei intensivpflichtigen, also auf intensivmedizinische Leistungen angewiesene, Patienten in der Regel ausgeschlossen, in jedem Fall aber mit besonderen Risiken verbunden.

Aus der US 4 621 620 A ist eine Vorrichtung zur Dehnung und Stärkung menschlicher Gliedmaßen mittels automatisierter Bewegungen bekannt, bei der eine Umlagerung des Patienten vom Bett auf eine Rehabilitationsvorrichtung vermieden wird. Die Vorrichtung umfasst einen starren Rahmen, welcher in erster Näherung rechtwinklig aufgebaut ist und somit eine vertikale und eine horizontale Achse vorgibt. Ein "Hauptschlitten", welcher entlang der vertikalen Achse verfahrbar ausgestaltet ist bietet seinerseits die Möglichkeit als "Fahrbahn" für einen zweiten, bezüglich des Rahmens horizontal verfahrbaren Schlitten zu fungieren, welcher den Fuß einer Person zu halten vermag. Eine Kombination der Vertikalbewegung des Hauptschlittens mit gleichzeitiger Horizontalbewegung des zweiten Schlittens führt dann zu einer gangartigen Bewegung, welche über den mitgeführten Fuß auf das gesamte Bein einer Person übertragen werden kann. Der zweite, den Fuß führende Schlitten, ist dabei über zwei, miteinander wiederum über ein Gelenk verbundene Verbindungsstücke mit dem zur Person gerichteten Ende des Rahmens verbunden, an welchen zur Unterstützung und Sicherung des Ober- bzw. Unterschenkel des Beines Gurtbänder vorgesehen sind. Die Vorrichtung kann als Ganzes beispielsweise auf der Matratze eines Krankenhausbettes platziert werden.

Die US 4 665 899 A offenbart eine Vorrichtung zur Beugung des Knie- und Hüftgelenks einer Person zu therapeutischen Zwecken, welche ebenfalls als Ganzes auf der Matratze eines Krankenhausbettes aufgesetzt werden kann. Die Vorrichtung besteht aus einem rechteckigen Rahmen und einem Schlitten, welcher entlang der Längserstreckung des Rahmens bewegt werden kann und einen Fuß der Person führt. Der Schlitten ist zusätzlich beidseitig über je zwei, über ein Gelenk miteinander verbundene Verbindungsstangen mit der, der Person zugewandten Seite des Rahmens verbunden. An den der Person näherliegenden Verbindungsstangen sind dabei Gurte zur Fixierung/Sicherung des Oberschenkels der Person vorgesehen. Eine Beugebewegung des Knie- und Hüftgelenks der Person wird nun durch Verschiebung des Schlittens entlang der Längserstreckung des Rahmens zur Person hin realisiert.

In der DE 41 13 135 A1 ist schließlich ein Therapiegerät zum passiven Bewegen der Beine mit einer elektromotorisch antreibbaren Kurbel und Pedalen in Form von Fußschalen, an denen die Beine festgemacht werden können, mit einem am Fußende eines Krankenbetts anbringbaren Haltegestell für das Kurbellager und mit Mitteln zur Unterstützung der Beine im Kniebereich, um ein Durchsacken in die Streckstellung zu verhindern. Die Bewegung der Beine erfolgt hier ausschließlich über eine Kraftübertragung auf die Füße einer Person.

Im Übrigen sei noch auf die US 4 586 495 A, die US 2004/172097 A1, die US 4 520 827 A und die US 5 239 987 A hingewiesen.

### Rehabilitation intensivmedizinischer Aktivitätseinschränkungen

Die Intensivmedizin ist ein medizinisches Fachgebiet, das sich mit Diagnostik und Therapie lebensbedrohlicher Zustände und Krankheiten befasst. Das Erbringen intensivmedizinischer Leistungen geschieht meist in besonders ausgerüsteten Stationen eines Krankenhauses bzw. Spitals, den sog. Intensivstationen, die durch speziell ausgebildete Fach-ärzte, wie Anästhesisten, Internisten, Chirurgen oder Neurologen, geführt werden.

Die Ergebnisse intensivmedizinischer Leistungen umfassen entsprechend der grundlegenden Erkrankung eine große Spannweite. Prinzipiell muss eine gewisse günstige Prognose des krankhaften Zustandes gegeben sein. Ziel intensivmedizinischer Leistungen nämlich ist die Wiederherstellung der völligen Gesundheit oder wenigstens das Erreichen eines weitgehend autonomen Zustandes des Patienten. Sogenannte lebensverlängernde Maßnahmen verfolgen somit keinen Selbstzweck.

Auf Intensivstationen werden Patienten aufgenommen, deren Zustand lebensbedrohlich ist oder deren Zustand lebensbedrohlich werden könnte, insbesondere bedingt durch ein labiles Herz-Kreislauf-System, Risiko von Herzstillstand, Infektionsrisiken und dergleichen mehr. Dieser Tatsache tragen auf Intensivstationen standardisierte Überwachungsmaßnahmen Rechnung.

Intensivstationen sind baulich und gerätetechnisch aufwendig ausgestattet. Einen Schwerpunkt bildet dabei die Gestaltung des Intensivbettes, welches der sicheren Lagerung Schwerstkranker auf Intensivstationen dient. Neben einer die Überwachungsmaßnahmen unterstützenden Apparatur zeichnet sich ein Intensivbett insbesondere durch eine Matratze aus geeignet ausgebildet sowohl zur Vorbeugung von Dekubitus als auch für eine sofortige manuelle Reanimation zumindest von Herz- und/oder Lunge eines intensivpflichtigen Patienten. Ferner muss die Matratze zur Durchführung von Defibrillationen nichtleitend und beständig gegen Flüssigkeiten, Blut sowie Wischdesinfektionen mit handelsüblichen Desinfektionsmitteln sein. Um intensivpflichtige Patienten gegen ein Herausfallen zu sichern ist die Matratze gewöhnlich von Längs- und Querseitenbegrenzungen umgeben, welche an den Längs- bzw. Querseiten eines Bett- oder Matratzenrahmens befestigbar sind und nicht selten zumindest einen Teil der Überwachungsapparatur haltern.

Aufgrund dieser typischen Gestaltung von Intensivbetten können die bekannten, oben beschriebenen Rehabilitationsvorrichtungen nicht einfach an ein modernes Intensivbett herangeführt werden und/oder erfordern eine Umlagerung des Patienten. Letzteres aber - darauf wurde schon hingewiesen - ist bei intensivpflichtigen, normalerweise labilen oder aus anderen Gründen auf intensivmedizinische Leistungen angewiesene, Patienten in der Regel ausgeschlossen, in jedem Fall aber mit besonderen Risiken verbunden.

Dabei tragen Patienten intensivmedizinischer Einrichtungen ohnehin bereits ein fünf- bis zehnfach höheres Infektionsrisiko gegenüber Patienten von Normalstationen. So addieren sich bei intensivpflichtigen Patienten verschiedene infektionsbegünstigende Faktoren, die sowohl vom Patienten selbst als auch von intensivmedizinisch angewandten Behandlungsmaßnahmen (viele Katheter, Schläuche, etc....) ausgehen können. Deshalb sind, um das Infektionsrisiko zu verringern, auf Intensivstationen besondere Hygienemaßnahmen vorgeschrieben, denen Rehabilitationsvorrichtungen wie die bekannte Im-Bett-Übungsmaschine oder der bekannte Stehtisch nur schwerlich genügen.

Mit Rehabilitationsvorrichtungen unterstützte Rehabilitationsstrategien finden daher bislang für gewöhnlich erst Anwendung, nachdem der Patient die Intensivstation verlassen hat.

### Rehabilitation neurologischer Aktivitätseinschränkungen

Die Neurologie ist die Lehre von den Erkrankungen des Nervensystems. Die Organsysteme, die in der Neurologie Berücksichtigung finden, sind das Zentralnervensystem, also Gehirn und Rückenmark, seine Umgebungsstrukturen und blutversorgende Gefäße sowie das periphere Nervensystem einschließlich dessen Verbindungsstrukturen mit den Muskeln sowie die Muskulatur.

In der neurologischen Rehabilitation haben neueste Studien gezeigt, dass Rehabilitation möglichst früh beginnen sollte. Um den Rehabilitationserfolg zu maximieren sollte beispielsweise bereits 24 Stunden nach einem Schlaganfall mit Querschnitts- oder anderen Lähmung oder einer traumatischen Hirnschädigung mit oder ohne einer quantitativen Bewusstseinsstörung, welche in ihrer schwersten Form ein Koma darstellt, mit Rehabilitations- Maßnahmen begonnen werden.

Da sich von Lähmung und/oder Bewusstseinsstörung betroffene Patienten zu diesem Zeitpunkt für gewöhnlich noch auf einer Intensivstation befinden, gestalten sich frühzeitig aufzunehmende neurologische Rehabilitationsstrategien als doppelt schwierig: neben der schon beschriebenen, nicht unproblematischen Intensivumgebung müsste nämlich zumindest bei gelähmten und/oder komatösen Patienten die gesamte Beinbewegung zumindest anfänglich allein von der Rehabilitationsvorrichtung zyklisch durchgeführt werden.

Aus diesen Gründen finden Übungen zur Aktivhaltung von Patienten intensivmedizinischer Einrichtungen allenfalls durch spezielle Physiotherapeuten statt, welche die Gliedmaßen intensivpflichtiger Patienten - soweit möglich täglich, mindestens jedoch mehrmals wöchentlich - manuell von Hand bewegen. Diese manuelle Physiotherapie hat nun zum Nachteil, dass die Therapeuten aufgrund der physischen Anstrengungen schnell ermüden können, was zu kaum planbaren, geschweige denn auswertbaren, Anwendungsfortschritten führt. Weiterhin ist nicht garantiert, dass der Physiotherapeut bei jeder Physiotherapieanwendung mit gleichem (maximalen) Einsatz und Effizienz arbeitet. Auch kann der Physiotherapeut keine objektive, sondern nur eine subjektive Quantifizierung der Aktivität des Patienten durchführen, was die objektive Quantifizierung des Therapieerfolges über mehrere Therapieanwendungen erschwert. Schließlich kann, besonders im intensivmedizinischen Umfeld, eine Therapieanwendung nicht nur die Anwesenheit eines oder mehrerer Physiotherapeuten erfordern, sondern ebenfalls die Anwesenheit der Krankenschwester/des Krankenpflegers, welche/r die Vitalparameter des Patienten während der Anwendung überwachen muss um z.B. auf Herz-Kreislauf Probleme reagieren zu können. Durch die zusätzliche Anwesenheit von hochqualifiziertem Klinikpersonal werden derartige Therapieanwendungen kaum bezahlbar.

Hiervon ausgehend liegt der vorliegenden Erfindung die Aufgabe zugrunde, einen gegenüber dem Stand der Technik verbesserten Rehabilitationsmechanismus, insbesondere für aufgrund orthopädischer, intensivmedizinischer und/oder neurologischer Aktivitätseinschränkungen bettpflichtig gewordener Patienten, bereitzustellen, welcher ohne den Patienten umbetten zu müssen eine planmäßig automatisierte Rehabilitation zumindest der Gelenke, Muskeln und Sehnen der Beine bettpflichtiger Patienten gestattet. Neben handelsüblichen oder eigens geschaffenen Pflege- oder Krankenbetten soll der Rehabilitationsmechanismus insbesondere auch in handelsüblichen oder eigens geschaffenen Spital- oder Intensivbetten einsetzbar sein, und zwar unabhängig davon, ob der bettpflichtige Patient in dem jeweiligen Bett ganz oder teilweise in eine vertikalisierte Lage gebracht werden kann, wobei in einer jeden vom bettpflichtigen Patienten zwischen einer horizontal und einer vertikalisiert eingenommenen Lage der Rehabilitationsmechanismus eine rhythmische Be- und Entlastung der Fußsohlen bettpflichtiger Patienten unterstützen können soll.

Diese Aufgabe wird zunächst durch einen Rehabilitationsmechanismus mit den Merkmalen des unabhängigen Patentanspruchs 1 gelöst.

Ein Rehabilitationsmechanismus nach der Erfindung, welcher für eine planmäßig automatisierte Rehabilitation zumindest der Gelenke, Muskeln und Sehnen der Beine eines bettpflichtigen Patienten geeignet ausgebildet ist, umfasst wenigstens:
- ein in Wirkverbindung mit den Füßen des bettpflichtigen Patienten bringbares Fußmodul;
- ein in Wirkverbindung mit den Kniegelenken des pflichtigen Patienten bringbares Kniemodul; und
- ein Steuermodul zur Aussteuerung planmäßiger Rehabilitationsbewegungen zumindest der Gelenke, Muskeln und Sehnen der Beine des bettpflichtigen Patienten mittels des Fuß- und/oder des Kniemoduls.

Er zeichnet sich zusätzlich dadurch aus, dass das Kniemodul zur Aussteuerung einer planmäßigen Unterstützungskraft auf die Kniegelenke des Patienten eingerichtet ist; und dass zumindest das Kniemodul als ein zwischen Patient und Matratze anordenbares, sich unmittelbar an einem Bett- oder Matratzenrahmen abstützendes und beidseitig der Längsseiten des Bettes festsetzbares Modul ausgebildet ist.

Ein solches Kniemodul kann vorteilhaft variabel entlang der Längsseiten festsetzbar ausgebildet und damit korrespondierend zu den anatomischen Verhältnissen mit den Kniegelenken eines bettpflichtigen Patienten in Wirkverbindung gebracht werden.

Die modulare Ausbildung des Rehabilitationsmechanismus hat zum Vorteil, dass bett- und insbesondere intensivpflichtige Patienten eine planmäßig automatisierte Rehabilitation unmittelbar im Bett erhalten können und zwar auch ohne riskante Umbettung und/oder Möglichkeiten zu einem Eigenbeitrag.

Unter dem Begriff "Modul" bzw. "modulare Ausbildung" soll im Folgenden insbesondere verstanden werden, dass die so bezeichneten Bauteile einzelne, in sich abgeschlossene Baugruppen bilden, die zwar mit weiteren Elementen in Wirkbeziehung stehen, von diesen aber reversibel zum Zwecke der Verstauung und/oder zum Transport trennbar sind. Die Module, insbesondere das Fußmodul und das Kniemodul sind mechanisch und elektrisch vollständig von einem Bett, an dem diese eingesetzt werden, trennbar und entfernbar und so separat verstaubar. Alternativ oder zusätzlich können diese Module weggeklappt werden, etwa in einen Raum unterhalb einer Matratze eines Bettes.

Die Modularität/Abnehmbarkeit/Entfernbarkeit des Fuß- und Kniemoduls vom Bett, sei es durch Abtrennung oder durch Verstauung der Therapiemodule unter dem Bett, ist besonders vorteilhaft, da so das Bett außerhalb der Therapiezeiten als normales Bett genutzt werden kann. Unter "normaler Nutzung" ist hierbei zu verstehen, dass kein Element des Rehabilitationsmechanismus den Zugang zum Patienten von allen Seiten in irgendeiner Form behindert, den Transfer von/in das Bett behindern oder evtl. notwendige Notmaßnahmen oder Pflegemaßnahmen behindert oder erschwert.

Bevorzugt ist der Rehabilitationsmechanismus reversibel lösbar an einem Bett, insbesondere einem herkömmlichen Krankenhausbett, festsetzbar. Er ist dazu vorgesehen und eingerichtet an herkömmlichen Krankenhausbetten reversibel angeordnet zu werden, um so einen im Bett liegenden Patienten einer Therapie zu unterziehen. Das weist der Rehabilitationsmechanismus vorzugsweise Stütz- und/oder Klemmmittel auf, um die reversible Festsetzbarkeit zu erreichen. Vorzugsweise ist der Rehabilitationsmechanismus als Modul von einem Bett, insbesondere einem herkömmlichen Krankenhausbett, abnehmbar und/oder unter dem Bett verstaubar. Hierdurch wird die Verwendung des Rehabilitationsmechanismus wesentlich vereinfacht. Er stellt ein in sich geschlossenes System dar, welches wahlweise insbesondere an bestehenden Krankenhausbetten einsetzbar ist.

Durch die Anordnung eines Kniemoduls zwischen Patient und Matratze und dessen Abstützung unmittelbar an einem Bett- oder Matratzenrahmen ist es insbesondere ermöglicht, auf die Kniegelenke bettpflichtiger Patienten eine, dessen Fußsohlen vorteilhaft rhythmisch be- und entlastende, Unterstützungskraft aufzubringen und zwar in einer jeden vom Patienten zwischen einer horizontal und einer vertikalisiert eingenommenen Lage.

Bei orthopädischen Patienten ist die rhythmische Be- und Entlastung der Fußsohlen wichtig, um z.B. ein verletztes Gelenk wieder an das Gehen und/oder bei einer ganz oder teilweise vertikalisiert eingenommenen Lage an eine Belastung zu gewöhnen.

Bei intensivpflichtigen Patienten ist die rhythmische Be- und Entlastung der Fußsohlen von Bedeutung, um einem Versteifen der Beine und einem Verkümmern der im Rückenmark angesiedelten Lokomotionszentren vorzubeugen.

Bei neurologischen Patienten erzeugt die alternierende Bewegung in den Fußsohlen zusätzlichen sensorischen Input, der an das zentrale Nervensystem weitergeleitet wird. Dieser sog. "efferente sensorische Input" sorgt dafür, dass auch die Hirnregionen angeregt werden, welche in der Generierung von Gehbewegungen involviert sind.

Die mit einem Rehabilitationsmechanismus nach der Erfindung ermöglichte planmäßig automatisierte Rehabilitation zumindest der Gelenke, Muskeln und Sehnen der Beine bett- und insbesondere intensivpflichtiger Patienten hat zum Ziel, Aktivitätseinschränkungen und/oder Störung der Teilhabe am sozialen Leben auf ein Minimum zu beschränken. Die zentrale therapeutische Idee dahinter ist, die Aktivität bett- oder insbesondere intensivpflichtiger Patienten frühestmöglich, also noch im Bett zu quantifizieren und/oder auf ein gewünschtes Niveau zu regeln. Die diesbezüglich im Rahmen der vorliegenden Erfindung erforderliche Bestimmung der einzelnen Parameter einer planmäßig automatisierten Rehabilitation verantworten gleichwohl in der Praxis Physiotherapeuten oder mindestens vergleichbar ausgebildete Fachkräfte.

Besonders bevorzugt ist die Rehabilitationsbewegung eine Gehbewegung, Schrittbewegung und/oder Treppensteigen-simulierende Bewegung. Eine Gehbewegung, Schrittbewegung oder Treppensteigen-simulierende Bewegung ist wesentlich vorteilhafter bei der Rehabilitation als beispielsweise eine Fahrradfahrbewegung. Aus DE 41 13 135 A1 ist beispielsweise ein reines Fußmodul bekannt, welches eine Fahrradfahrbewegung erlaubt. Allerdings ist es für Rehabilitationspatienten weitaus wichtiger, eine Gehbewegung, Schrittbewegung oder Treppensteigen-simulierende Bewegung zu erlernen und die Belastung, die bei einer solchen Gehbewegung, Schrittbewegung oder Treppensteigen-simulierende Bewegung auftritt, zu simulieren und die Fortschritte hierbei zu messen. Eine Fahrradfahrbewegung eignet sich nur unter bestimmten Bedingungen, da hier insbesondere kein Abrollen des Fußes auftritt und auch ein Moment, das auf das Sprunggelenk des Fußes ausgeübt wird, tendenziell gering ist.

Gemäß der Erfindung bilden das Fußmodul und das Kniemodul gemeinsam ein Exoskelett für den Patienten. Die das Exoskelett bildenden Module wirken mittels des Steuermoduls zusammen und unterstützen den Patienten bei der Ausübung der Bewegung.

Weiterhin umfasst der Rehabilitationsmechanismus bevorzugt ein Biofeedbackmodul zum Bereitstellen eines visuellen und/oder auditiven Feedbacks für den Patienten. Ein solches Biofeedbackmodul weist bevorzugt ein Display oder dergleichen auf, das im Sichtfeld des Patienten angeordnet wird, um diesem Feedback zu geben. Ein solches Biofeedbackmodul kann grundsätzlich wie in US 2010/0042022 A1 offenbart ausgebildet sein. Es ist bevorzugt dazu ausgebildet, dem Patienten anzuzeigen, wenn dieser eine Bewegung korrekt ausführt und/oder Fortschritte macht. Ferner ist das Biofeedbackmodul vorzugsweise dazu ausgebildet, dem Patienten anzuzeigen, wenn dieser eine Bewegung nicht korrekt ausführt, eine Übung wechseln sollte, die Übung beenden sollte und dergleichen.

Gegenstand der vorliegenden Erfindung ist daher auch ein den erfindungsgemäßen Rehabilitationsmechanismus umfassendes Bett, wobei dieses z.B. als handelsübliches oder eigens gebautes Pflegebett, Krankenbett, Spitalbett oder insbesondere als Intensivbett ausgebildet sein kann.

Vorteilhafte Ausgestaltungen und Weiterbildungen, welche einzeln oder in Kombination miteinander einsetzbar sind, sind Gegenstand der abhängigen Ansprüche.

Diese sowie zusätzliche Einzelheiten und weitere Vorteile der Erfindung werden nachfolgend an Hand bevorzugter Ausführungsbeispiele, auf welche die vorliegende Erfindung jedoch nicht beschränkt ist, und in Verbindung mit der beigefügten Zeichnung beschrieben.

Darin zeigen schematisch:
- Fig.1: einen bett- oder intensivpflichtigen Patienten in einem handelsüblichen Bett, insb. Intensivbett, in einer Seitenansicht;
- Fig. 2: einen am Bett gem. Fig. 1 angeordneten Rehabilitationsmechanismus umfassend ein Fußmodul, ein Kniemodul und ein Steuermodul in einer Draufsicht;
- Fig. 3: ein erstes Ausführungsbeispiel eines elektro- und/oder mechanisch ausgebildeten Fußmoduls in einer Seitenansicht;
- Fig. 4: ein zweites Ausführungsbeispiel eines elektro- und/oder mechanisch ausgebildeten Fußmoduls in einer Seitenansicht;
- Fig. 5: ein erstes Ausführungsbeispiel eines elektro- und/oder mechanisch ausgebildeten Kniemoduls in einer Queransicht (Fig. 5a) und in einer Seitenansicht (Fig. 5b);
- Fig. 6: ein zweites Ausführungsbeispiel eines elektro- und/oder mechanisch ausgebildeten Kniemoduls in einer Queransicht;
- Fig.7: ein Ausführungsbeispiel eines fluiddynamisch ausgebildeten Kniemoduls in einer Queransicht;
- Fig. 8: ein Ausführungsbeispiel eines Verstellmechanismus zur Vertikalisierung des Matratzenrahmens um z.B. 90° in einer Seitenansicht;
- Fig. 9: ein erstes Ausführungsbeispiel eines Stabilisierungsmechanismus bei einem Vertikalisierungsgrad von z.B. 60° in einer Seitenansicht;
- Fig. 10: ein zweites Ausführungsbeispiel eines Stabilisierungsmechanismus bei einem Vertikalisierungsgrad von z.B. 75° in einer Seitenansicht;
- Fig. 11: ein Regelungsschema des Steuermoduls zur Aussteuerung planmäßiger Rehabilitationsbewegungen;
- Fig. 12: eine schematische Darstellung eines Betts mit Rehabilitationsmechanismus gemäß einem ersten Ausführungsbeispiel;
- Fig. 13: eine schematische Darstellung eines Betts mit Rehabilitationsmechanismus gemäß einem zweiten Ausführungsbeispiel;
- Fig. 14: eine schematische Darstellung eines Betts mit Rehabilitationsmechanismus gemäß einem dritten Ausführungsbeispiel;
- Fig. 15: eine schematische Darstellung eines Betts mit Rehabilitationsmechanismus gemäß einem vierten Ausführungsbeispiel;
- Fig. 16: eine perspektivische Ansicht eines Betts mit Rehabilitationsmechanismus 25 gemäß einem fünften Ausführungsbeispiel;
- Fig. 17: eine Seitenansicht des Bettes aus Fig. 16 mit dem Rehabilitationsmechanismus in einem ersten Zustand;
- Fig. 18: eine Seitenansicht des Bettes aus den Fig. 16 und 17 mit dem Rehabilitationsmechanismus in einem zweiten Zustand;
- Fig. 19: eine weitere perspektivische Ansicht des Bettes aus den Fig. 16 bis 18 ohne Patient;
- Fig. 20: eine perspektivische Detailansicht des Rehabilitationsmechanismus gemäß den Fig. 16 bis 19;
- Fig. 21: eine perspektivische Ansicht eines Betts mit Rehabilitationsmechanismus gemäß einem sechsten Ausführungsbeispiel;
- Fig. 22: eine Seitenansicht des Bettes aus Fig. 21 mit dem Rehabilitationsmechanismus in einem ersten Zustand;
- Fig. 23: eine Seitenansicht des Bettes aus den Fig. 21 und 22 mit dem Rehabilitationsmechanismus in einem zweiten Zustand;
- Fig. 24: eine perspektivische Detailansicht des Rehabilitationsmechanismus gemäß den Fig. 21 bis 23;
- Fig. 25: eine schematische Seitenansicht eines Rehabilitationsmechanismus gemäß einem siebten Ausführungsbeispiel;
- Fig. 26: eine schematische Seitenansicht eines Rehabilitationsmechanismus gemäß einem achten Ausführungsbeispiel;
- Fig. 27: eine schematische Seitenansicht eines Rehabilitationsmechanismus gemäß einem neunten Ausführungsbeispiel;
- Fig. 28a: eine schematische Seitenansicht eines Fußmoduls in einer ersten Position;
- Fig. 28b: eine schematische Seitenansicht des Fußmoduls aus Fig. 28a in einer zweiten Position;
- Fig. 29a: eine schematische Seitenansicht eines Fußmoduls in einer ersten Position;
- Fig. 29b: eine schematische Seitenansicht des Fußmoduls aus Fig. 29a in einer zweiten Position; und
- Fig. 30: einen Regelkreis für eine EMG-Regelung.

Bei der nachfolgenden Beschreibung bevorzugter Ausführungsformen der vorliegenden Erfindung bezeichnen gleiche Bezugszeichen gleiche oder vergleichbare Komponenten.

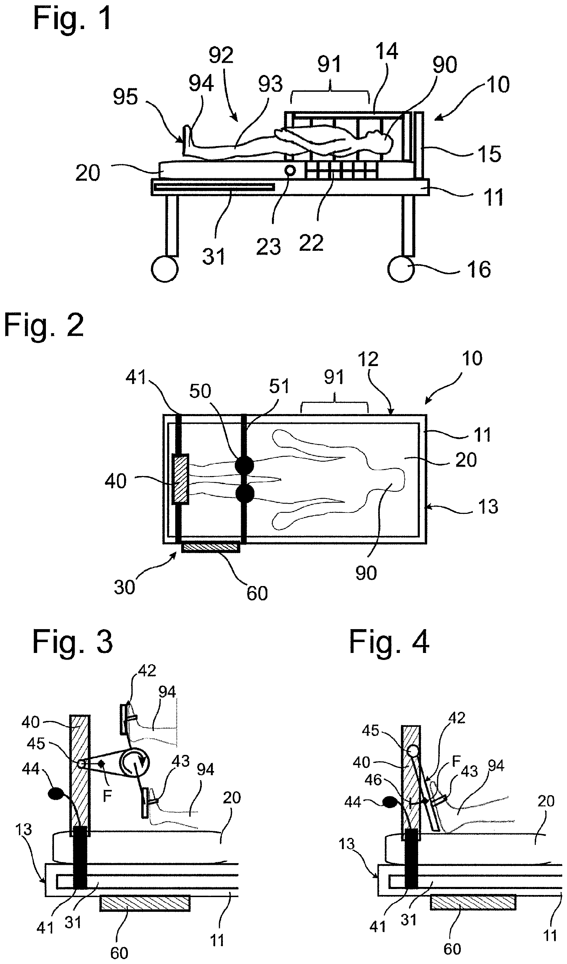

**Fig. 1** zeigt einen bett- oder intensivpflichtigen Patienten 90 in einem handelsüblichen Bett 10, insb. Intensivbett, in einer Seitenansicht. Das dargestellte Bett 10 kann insbesondere für typischerweise an Intensivbetten gestellten medizinischen Anforderungen ausgebildet, aber auch in einem Nicht-Intensiv Umfeld eingesetzt sein, insbesondere als Pflege, Kranken- oder Spitalbett. Neben einer die Überwachungsmaßnahmen unterstützenden Apparatur (nicht dargestellt), zeichnet sich das dargestellte Bett 10 durch eine Matratze 20 aus geeignet ausgebildet zumindest zur Vorbeugung von Dekubitus. Im Fall eines Intensivbettes zeichnet sich das dargestellte Bett 10 zudem durch eine Matratze 20 aus, welche zusätzlich für eine sofortige manuelle Reanimation zumindest von Herz- und/oder Lunge 91 eines intensivpflichtigen Patienten 90 ausgebildet und zur Durchführung von Defibrillationen nichtleitend und beständig ist gegen Flüssigkeiten, Blut sowie Wischdesinfektionen mit handelsüblichen Desinfektionsmitteln, wobei aus Reinigungs- bzw. Desinfektionsgründen ungeteilte bzw. durchgängig ausgebildete Matratzen 20 bevorzugt sind. Um bett- und insbesondere intensivpflichtige Patienten 90 gegen ein Herausfallen zu sichern, ist die Matratze 20 ganz oder teilweise von Längs- 14 und Querseitenbegrenzungen 15 umgeben, welche beispielsweise an Längs- 12 bzw. Querseiten 13 eines Bett-11 oder Matratzenrahmens 21 des Bettes 10 befestigbar sind, die für gewöhnlich zumindest einen Teil der Überwachungsapparatur haltern (nicht dargestellt). Um das Bett 10 bewegen zu können, weist dieses beispielsweise Rollbeine 16 auf. Zur Verbesserung der Manövrierbarkeit, können die Rollbeine 16 motorgetrieben ausgebildet sein. Bevorzugt sind auch Ausgestaltungen, bei denen der Bett- 11 und/oder Matratzenrahmen 21 höhen- und/oder in der Neigung (gleich ob längs oder quer) verstellbar ausgebildet sind, wobei das Kopf- und Fußende vorzugsweise separat, also mit unterschiedlichen und/oder entgegengesetzten Neigungen zueinander, verstellbar ausgebildet sein können (nicht dargestellt).

**Fig. 2** zeigt einen am Bett 10 gem. Fig. 1 angeordneten Rehabilitationsmechanismus 30 nach der Erfindung umfassend ein Fußmodul 40, ein Kniemodul 50 und ein Steuermodul 60 in einer Draufsicht.

Erkennbar ist, wie in einer ersten bevorzugten Ausgestaltung des Rehabilitationsmechanismus 30 dieser ein Fuß- 40 und ein Kniemodul 50 umfasst, welche als oberhalb der Matratze 20 anordenbare, sich unmittelbar oder mittelbar an einem Bett- 11 oder Matratzenrahmen 21 abstützende, Module ausgebildet sind. Dies hat zum Vorteil, dass auch handelsübliche, insbesondere ungeteilte und leicht zu reinigende bzw. desinfizierende, Matratzen 20 Verwendung finden können, da (anders als insb. beim eingangs erwähnten Stehtisch) diese keiner Mechanik Platz machen müssen. Zudem können, wenn eine Rehabilitation nicht stattfindet, das Fuß- 40 und das Kniemodul 50 vorteilhaft vom Bett- 11 oder Matratzenrahmen 21 abgenommen werden, wonach das Bett 10 als bestimmungsgemäßes Bett 10, beispielsweise als Pflegebett, Krankenbett, Spitalbett oder Intensivbett, fungiert. Die abgenommenen Module können - ggf. nach einer vorherigen Reinigung oder Desinfektion - bis zur Fortsetzung der Rehabilitation z.B. am oder unter dem Bett 10 geeignet verstaut (nicht dargestellt) oder bevorzugt zwischenzeitlich zur Durchführung weiterer planmäßig automatisierter Rehabilitationen an anderen bettpflichtigen Patienten 90 genutzt werden, womit sich aufzubringende Investitionskosten für den Rehabilitationsmechanismus 30 vorteilhaft schneller amortisieren.

Erfindungsgemäß ist zumindest das Kniemodul 50 als ein zwischen Patient 90 und Matratze 20 anordenbares, sich unmittelbar an einem Bett- 11 oder Matratzenrahmen 21 abstützendes und beidseitig der Längsseiten 12 des Bettes 10 festsetzbares Modul ausgebildet. Um das Fußmodul 40 in Wirkverbindung mit den Füßen 94 und das Kniemodul 50 in Wirkverbindung mit den Kniegelenken 93 des bettpflichtigen Patienten 90 bringen zu können, sind in einer weiteren bevorzugten Ausgestaltung des erfindungsgemäßen Rehabilitationsmechanismus 30 das Fuß- 40 und das Kniemodul 50 als beidseitig der Längsseiten 12 des Bettes 10 festsetzbare Module ausgebildet. Die Festsetzbarkeit von Fuß- 40 und/oder Kniemodul 50 kann in einer preiswerten Ausgestaltung mittels zweier Führungsschienen 31 erfolgen, von welchen je eine an den Längsseiten 12 des Bett- 11 oder Matratzenrahmens 21 montierbar sind und so vorteilhaft auch eine Nachrüstbarkeit für eine Vielzahl bestehender Betten 10 erlauben. Für die variable Festsetzbarkeit entlang der Längsseiten 12 können das Fuß- 40 wie auch das Kniemodul 50 geeignete Feststellmittel 41 bzw. 51 aufweisen, mittels welchen die Module 40 und 50 vorteilhaft korrespondierend zu den anatomischen Verhältnissen mit den Füßen 94 und Kniegelenken 93 des bettpflichtigen Patienten 90 in Wirkverbindung gebracht werden können. Um unterschiedlich breite Betten 10 und/oder anatomischen Besonderheiten des bettpflichtigen Patienten 90 Rechnung tragen zu können sind schließlich Feststellmittel 41 bzw. 51 bevorzugt, welche nicht nur in Längsrichtung sondern auch in Querrichtung des Bettes 10 variabel einstellbar sind.

In einer weiteren bevorzugten Ausgestaltung des Rehabilitationsmechanismus 30 können das Fuß- 40 und/oder das Kniemodul 50 elektromechanisch ausgebildet sein. Eine ganz oder teilweise elektromechanische Ausführung von Fuß- 40 und/oder Kniemodul 50 hat den Vorteil, dass Elektromotoren sehr einfach und sehr präzise angesteuert werden können. Weiterhin sind Elektromotoren 45 oder andere Aktuatoren 53 (im Gegensatz z.B. zu pneumatischen Kompressoren) relativ geräuscharm. Außerdem können elektromechanische Antriebe bei entsprechender Ausführung sehr schnell bewegt werden, was in einer Notfallsituation vorteilhaft sein kann.

Alternativ oder kumulativ dazu können in einer weiteren Ausgestaltung des Rehabilitationsmechanismus 30 das Fuß- 40 und/oder das Kniemodul 50 fluiddynamisch ausgebildet sein. Eine ganz oder teilweise fluiddynamische Ausbildung von Fuß- 40 und/oder Kniemodul 50 hat den Vorteil, dass die Kraftübertragung auf den Patienten 90 beispielsweise mittels Kissen 57 erzeugt werden kann, die beispielsweise über ein Schlauchsystem 58 mittels einer Vakuumpumpe 59 ausgedehnt und/oder zusammengezogen werden: dies würde die für die Bewegungen der Beine 92 erforderlich Druck/Zugkräfte F auf eine größere Fläche am Patienten 90 verteilen, und so Verletzungsrisiken vorbeugen, da die Kräfte F nicht punktuell mit womöglich großer Intensität, sondern über eine größere Fläche mit geringerer Punktkraft übertragen werden können.

Vorstehendes sei anhand der in den nachfolgenden Figuren 3 bis 7 gezeigten Ausführungsbeispiele verdeutlicht:
**Fig. 3** zeigt ein erstes Ausführungsbeispiel eines elektro- und/oder mechanisch ausgebildeten Fußmoduls 40 in einer Seitenansicht.

Erkennbar ist, wie das Fußmodul 40 beispielsweise ähnlich einem Fitness-Stepper aufgebaut sein kann. Hierfür wird der bettpflichtige Patient 90 typischerweise Schuhe anziehen. Die Trittflächen 42 des Fußmoduls 40 können aber auch so gestaltet sein, dass barfuß oder in Socken trainiert werden kann. Eine Fixierung der Füße 94 am Fußmodul 40 kann durch elastische Fixierbänder 43 erfolgen, ähnlich einer Snowboard Bindung oder dergleichen. Hierdurch wird sichergestellt, dass die Fußsohlen 95 des bettpflichtigen Patienten 90 unabhängig von einer etwaigen Vertikalisierung Kontakt mit den Trittflächen 42 des Fußmoduls 40 erlangen. In einer weiteren Ausgestaltung kann das Fußmodul 40 einen Verstellhebel 44 aufweisen, mit dem die Distanz zwischen Trittfläche 42 und Fußsohle 95 beispielsweise fein-eingestellt werden kann.

Das Fußmodul 40 kann mechanisch und/oder elektromechanisch ausgebildet sein. In der mechanischen Variante kann - entsprechendes Bewusstsein und Fitness vorausgesetzt - ein bettpflichtiger Patient beispielsweise gegen eine Mechanik und/oder Dämpfungselemente antreten. Bei einer elektromechanischen Variante liefert ein Elektromotor 45 ganz oder teilweise Unterstützungskraft insbesondere in dem Umfang, in welchem der bettpflichtige Patient Bewegungen seiner Beine 92 und/oder Belastungen seiner Fußsohlen 95 nicht selbstständig auszuführen vermag. Denkbar sind schließlich auch kombinierte Ausführungen eines Fußmoduls 40, bei denen beispielsweise einer Mechanik eine elektromotorische Unterstützungskraft oder umgekehrt zu- oder abgeschaltet werden kann.

**Fig. 4** zeigt ein zweites Ausführungsbeispiel eines elektro- und/oder mechanisch ausgebildeten Fußmoduls 40 in einer Seitenansicht. Gegen eine Mechanik und/oder mittels eines Elektromotors 45 werden die Trittflächen 42 bewegt, an denen die Fußsohlen 95 des Patienten 90 anliegen oder auf denen dieser nach einer ganz oder teilweisen Vertikalisierung steht. Ein Winkelsensor 46 misst den aktuellen Winkel in dem sich die Trittflächen 42 aktuell befinden, wobei bei Null Grad die Trittflächen 42 senkrecht zur Matratze 20 stehen. Mittels des Steuermoduls 60 lassen sich dann mit dem Winkelsensor 46 gemessene Ist-Winkel mit geplanten Soll-Winkeln abgleichen und ggf. erforderliche Unterstützungskräfte berechnen bzw. aussteuern.

Gemäß diesem Ausführungsbeispiel (Fig. 4) sind zwei Trittflächen 42, jeweils eine für einen Fuß des Patienten 90 vorgesehen. Diese sind an dem Elektromotor 45, beispielsweise der Motorwelle um die Achse der Motorwelle schwenkbar angelenkt. So wird auf vorteilhafte Weise eine Schrittbewegung erreicht. Der Fuß des Patienten ist um eine Achse nahe der Fußspitzen drehbar. Die Elemente, welche an den Füssen des Patienten angebracht werden, z.B. Fixierbänder 43, fungieren dabei als Halterungsmechanismus, der die Füße an Ort und Stelle hält. Der einzige Freiheitsgrad ist das Heben und Senken des Fußes mit der überlagerten Drehbewegung um die Motorachse des Elektromotors 45. Bei einem passiven Fußmodul 40 ohne Elektromotor kann hier eine Aufhängung in Form eines Drehlagers vorgesehen sein, welches beispielsweise mittels Federn vorgespannt ist, um so eine Belastung für den Patienten 90 zu erzeugen.

Wichtig zur Realisierung einer Gehbewegung, Schrittbewegung und/oder Treppensteigen-simulierende Bewegung ist es, dass das Gerät dafür sorgt, dass der Fuß während der Gehbewegung, Schrittbewegung und/oder Treppensteigen-simulierende Bewegung abrollen kann, also nicht platt mit Ferse und Fuß-Spitze gleichzeitig aufsetzt, sondern vom vorderen Teil der Fuß-Spitze über den Mittelfuß auf die Ferse abrollt. Einerseits ist dadurch die Belastungssituation für den Patientenkörper der natürlichen Belastung näher, wenn ein Fußmodul ähnlich einem Fahrrad (vgl. Fig. 3) verwendet wird. Hierdurch kann auch bei der Vertikalisierung besser erkannt werden, wie fortgeschritten die Rehabilitation ist. Andererseits erlaubt dieses Ausführungsbeispiel, dass die Körper-Sensorsignale, welche von den Fußsohlen an das Gehirn übermittelt werden, denen einer echten Gangbewegung ähnlich sind. Die ist von Vorteil bei der Rehabilitation und kann zu einer rascheren Rehabilitation des Patienten führen.

Den Ausführungsbeispielen gem. Fig. 3 und 4 ist gemein, dass das jeweilige Fußmodul 40 mit mechanischen Endpunkten (End-stops) in Wirkverbindung stehen, welche ein Überstrecken oder Überdehnen des Fußes 94, insb. des Sprunggelenks, verhindern.

Anders als beim Fußmodul 40, welches auch rein mechanisch und insbesondere passiv ausgebildet sein kann, sollen mit einem Kniemodul 50 nach der Erfindung stets Unterstützungskräfte vorteilhaft knapp unterhalb, direkt am und/oder knapp oberhalb des Kniegelenkes 93 übertragen werden. Für die Durchführung planmäßiger Rehabilitationsbewegungen wird das Kniemodul 50 zwischen Matratze 20 und Patient 90 unter dessen Kniegelenke 93 geschoben und am Bett- 11 oder Matratzenrahmen 21 festgesetzt.

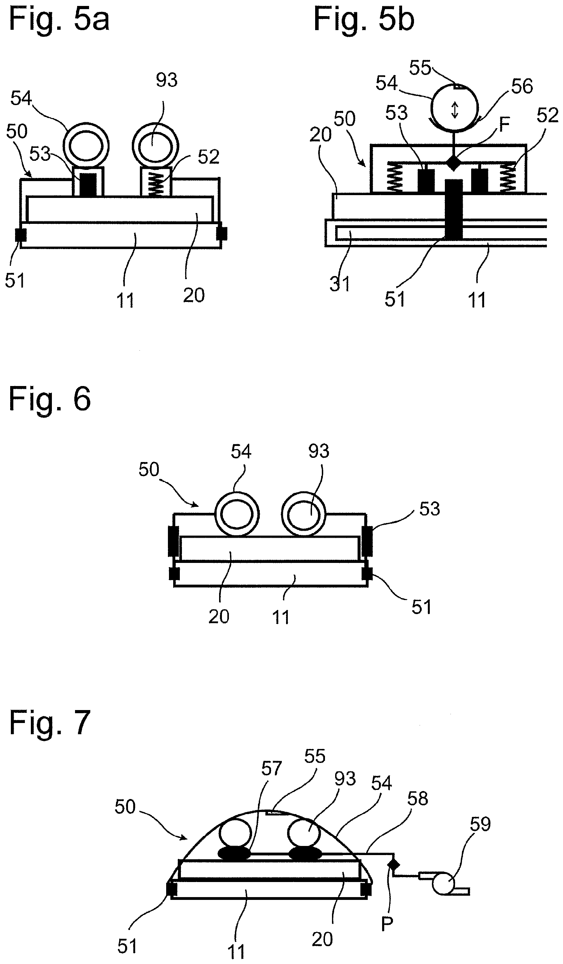

**Fig. 5** zeigt ein erstes Ausführungsbeispiel eines elektro- und/oder mechanisch ausgebildeten Kniemoduls 50 in einer Queransicht (**Fig. 5a**) und in einer Seitenansicht (**Fig. 5b**). In einer preiswerten, rein mechanischen Ausgestaltung eines Kniemoduls 50 beispielsweise, kann das Kniegelenk 93 beim Strecken eines Beines 92 mittels des Fußmoduls 40 gegen Feder- oder Dämpfungselement 52 gestreckt werden, welches die dabei gespeicherte kinetische Energie beim nachfolgenden Entstrecken des Beines 92 wieder abgibt und so das Kniegelenk 93 bei seiner dabei auszuführenden Beugebewegung unterstützt. Alternativ oder kumulativ dazu können elektrische Aktuatoren 53 im Kniemodul 50 verbaut sein, mittels welchen eine planmäßige Unterstützungskraft auf die Kniegelenkte 93 des Patienten 90 aussteuerbar ist.

**Fig. 6** zeigt ein zweites Ausführungsbeispiel eines elektro- und/oder mechanisch ausgebildeten Kniemoduls 50 in einer Queransicht. Anders als beim Ausführungsbeispiel gemäß Fig. 5 sind zwei Aktuatoren 53 nicht direkt im Kniemodul 50 sondern in den seitlichen Feststellmitteln 51 integriert.

Den Ausführungsbeispielen gem. Fig. 5 und 6 ist gemein, dass das jeweilige Kniemodul 50 mit mechanischen Endpunkten (End-stops) in Wirkverbindung steht, welche ein Überstrecken oder Überdehnen des Kniegelenkes 93 durch Abschaltung des Rehabilitationsmechanismus 30 verhindern, falls die Kräfte zu groß werden.

Den Ausführungsbeispielen gem. Fig. 5 und 6 ist auch gemein, dass mittels einer Manschette 54 auch die Kniegelenke 93 bettpflichtiger Patienten 90 am Kniemodul 50 Lagefixiert werden können. Dabei kann die Überstützungskraft der Aktuatoren 53 direkt oder über ein Getriebe 56 auf die Manschette 54 übertragen werden. Soweit die Manschette 54 bevorzugt zweigeteilt ausgebildet und endseitig einen Verschluss 55 beispielsweise aus Klett aufweist, kann die Manschette 54 vorteilhaft an die Anatomie des bettpflichtigen Patienten 90 angepasst werden. Darüber bieten zweigeteilte Manschetten auch die Möglichkeit, sich im Fall einer Überlast zu öffnen.

**Fig. 7** zeigt als weiteres Ausführungsbeispiel ein fluiddynamisch ausgebildetes Kniemodul 50 in einer Queransicht. Anstelle elektromechanischer Aktuatoren umfasst ein fluiddynamisch ausgebildetes Kniemodul 50 bevorzugt zwei Kissen 57, welche unter den Kniegelenken 93 des Patienten 90 positionierbar sind indem diese beispielsweise ähnlich eines Gürtels unter die Knie des Patienten geschoben werden. Beide Kissen 57 sind über ein Schlauchsystem 58 an eine Vakuumpumpe 59 angeschlossen und können unabhängig voneinander mit Flüssigkeit, Luft oder einem anderen Fluid gefüllt oder entleert werden. Beispielsweise mittels eines Drucksensor P und in Kombination mit dem Steuermodul 60 kann der Befüllungsgrad der Kissen 57 geregelt und so eine planmäßige Unterstützungskraft auf die Kniegelenkte 93 des Patienten 90 ausgesteuert werden: mit Befüllung dehnen die sich Kissen 57 aus, mit Entleerung ziehen sie sich zusammen, ähnlich eines Luftballons. Dehnt sich ein Kissen 57 aus, so drückt es mit gleicher Kraft in Richtung Matratze 20 und in Richtung des Kniegelenkes 93 des Patienten 90. Da sich das Kissen 57 gegen die Matratze 20 abdrückt, knickt das beaufschlagte Kniegelenk 93 des Patienten 90 planmäßig ein. Zieht sich das Kissen 57 zusammen, so kann das Bein 92 des Patienten 90 sich wieder strecken bzw. vom Fußmodul 40 gestreckt werden. Wiederum mittels einer Art Manschette 55, welche wie in Fig. 7 dargestellt auch beide Kniegelenke 93 überspannen kann, können die Kniegelenke 93 wiederum so in ihrer Lage zu den Kissen 57 fixiert werden, die Kissen 57 in Kontakt mit der Matratze 20 bleiben.

Um einer Überstreckung des Kniegelenks 93 vorzubeugen können die Kissen 57 so ausgesteuert werden, dass stets ein Rest an Fluid im Kissen 57 verbleibt. Zur Vermeidung eines zu weiten Ausdehnens der Kissen 57 und/oder des Schlauchsystems 58 kann ferner ein auf einen max. Schwelldruck eingestelltes Überdruckventil vorgesehen sein.

Für die Durchführung planmäßiger Rehabilitationsbewegungen ist schließlich entscheidend, dass das Fußmodul 40 als auch das Kniemodul 50 an die anatomischen Verhältnisse des bettpflichtigen Patienten 90 angepasst in einer individuellen Nullstellung des Patienten 90, in welcher dessen Beine 92 eine durchgestreckte Position einnehmen, zueinander fluchtend ausgerichtet werden können. Dazu kann beispielsweise mittels des am Fußmodul 40 vorgesehenen Hebels 44 auch eine senkrecht zur Matratze 20 liegende Endposition fein-abgestimmt werden. Alternativ oder kumulativ dazu können die Aktuatoren 53 elektromechanisch ausgebildeter Kniemodule 50 auf einen Fluchtpunkt besagter Nullstellung angefahren werden, von welchem aus dann die planmäßigen Rehabilitationsbewegungen ausgesteuert werden. Bei einem fluiddynamisch ausgebildeten Kniemodul 50 können die Kissen 57 mit einer Grundfüllung oder einem grundgefülltem Kammersystem ausgebildet sein, wobei die Grundfüllung wiederum dem angestrebten Fluchtpunkt besagter Nullstellung entspricht.

In einer weiteren bevorzugten Ausgestaltung des Rehabilitationsmechanismus 30 umfasst dieser mindestens einen Sensor F, EMG, mittels welchem beim Vollzug planmäßig automatisierter Rehabilitationsbewegungen eine Quantifizierung etwaiger Eigenleistungen bettpflichtiger Patienten 90
- über die Messung von Druckkräften F an den Fußsohlen 95 des Patienten 90 und/oder
- über die Messung von Druck- und/oder Zug-Kräften F am Kniemodul 30 und/oder
- über die Messung von Muskelaktivität EMG und/oder Muskelkräften F in den Beinen 92 des Patienten 90
ermöglicht ist.

Hierrüber kann eine objektive klinische Quantifizierung der Veränderung (Verbesserung) der Fähigkeiten des Patienten 90 durchgeführt werden, die Kräfte, welche zur Bewegung notwendig sind, selbstständig zu erzeugen. Über die Zeitdauer der Rehabilitation betrachtet (gewöhnlich mehrere Tage bis mitunter Wochen), kann diese Quantifizierung dann Aufschluss über den Rehabilitationsprozess/Rehabilitationserfolg geben. Basierend auf diesen von dem mindestens einen Sensor F, EMG bereitgestellten Daten kann daraufhin von den Fachkräften (Ärzte, Physiotherapeuten oder ähnliche) die automatisierten Rehabilitationsbewegungen insbesondere hinsichtlich der Methodik und/oder Intensität für den jeweiligen Patienten 90 im Laufe des Rehabilitationsprozesses angepasst, d.h. geplant, werden.

In einer weiteren bevorzugten Ausgestaltung des Rehabilitationsmechanismus 30 greift das Steuermodul 60 für die Aussteuerung planmäßig automatisierter Rehabilitationsbewegungen auf Druck- und/oder Zugkraftmesssignale und/oder EMG-Messsignale zurück. Hierdurch können die Rehabilitationsbewegungen so automatisiert durchgeführt werden, dass der Patient 90 die richtige Menge an Unterstützungskraft zur richtigen Zeit in die richtige Richtung erhält. Oder in anderen Worten; der bettpflichtige Patient 90 erhält nur in dem Teil des Bewegungszyklus eine Unterstützungskraft, in welchem er Unterstützung benötigt. Dagegen verhält sich der Rehabilitationsmechanismus 30 in dem Teil des Bewegungszyklus, in dem der Patient 90 ohne Hilfe Bewegungen durchführen kann, "transparent", d.h. er folgt nur der Bewegung des Patienten 90 ohne dabei eine Kraft aufzuprägen. Die Aussteuerung, d.h. Bestimmung, der jeweilig benötigten Unterstützungskraft kann z.B. durch Messung der Druck- und/oder Zugkräfte F und Verarbeitung im Steuermodul 60 so gestaltet werden, dass der Rehabilitationsmechanismus 30 dem Patienten 90 genau die Menge an Kraft zuführt, die der Patient 90 benötigt, um die Bewegung durchzuführen, aber eben nicht mehr. Dieses Konzept kann als "assist as needed" bezeichnet werden.

Mit Überwachung und Aussteuerung kann die aktive Teilnahme des Patienten 90 erstmals maximiert werden: dies geschieht vornehmlich durch Messung der Aktivität der Beine in Abhängigkeit der Belastung, der der Patient 90 ausgesetzt ist, und durch Regelung auf ein gewünschtes Maß. Die Quantifizierung der Eigenleistung des Patienten 90 kann über die Messung von Druckkräften an den Fußsohlen 95 des Patienten 90 und/oder die Messung von Muskelaktivität EMG bzw. Muskelkraft F in den Beinen 92 des Patienten 90 geschehen. Die Überwachung und Aussteuerung der Patientenaktivität hat zum Vorteil, dass der Patient 90 an der Grenze seiner Belastbarkeit rehabilitiert werden kann. Planmäßig automatisierte Bewegungen an der Belastbarkeitsgrenze stellen einen wesentlichen therapeutischen Fortschritt dar, insbesondere für intensivpflichtige und/oder komatöse Patienten 90. Weiterhin geben diese Messungen Aufschluss über den klinischen Fortschritt des Patienten 90.

Aus Sicherheitsgründen überwacht das Steuermodul 60 kontinuierlich alle Sensorwerte so dass dieses bei Detektion von Unstimmigkeiten oder Abweichungen zur geplanten Rehabilitation den Rehabilitationsmechanismus 30 abschaltet und/oder geeignete Warnsignale abgibt. Es kann darüber hinaus, insbesondere bei Anwendung an Koma-Patienten 90, sowohl sensorseitig als auch steuerungsseitig redundant ausgelegt sein.

Der erfindungsgemäße Rehabilitationsmechanismus 30 eignet sich insbesondere für handelsübliche oder eigens geschaffene Betten 10 aller Art, insbesondere für Pflegebetten, Krankenbetten, Spitalbetten und/oder Intensivbetten.

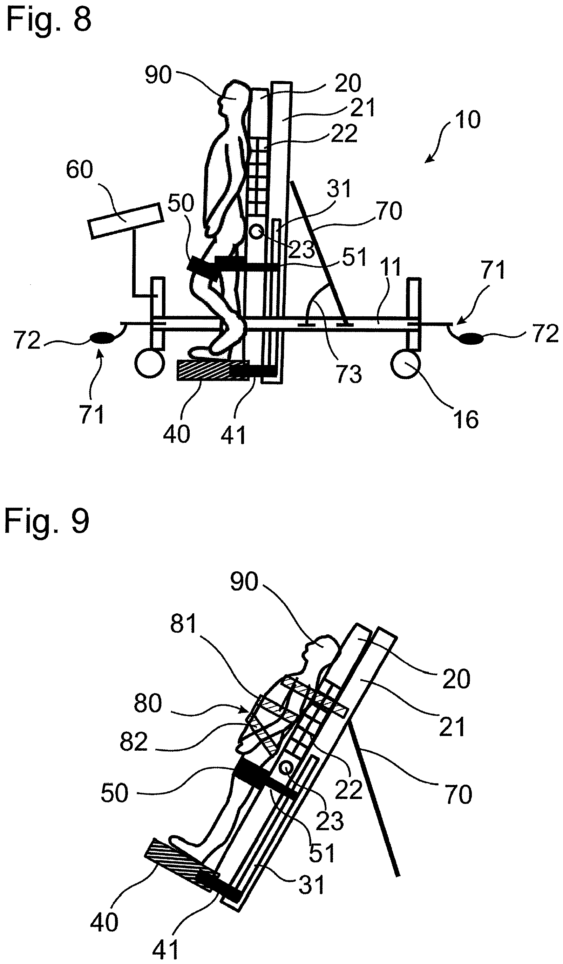

Dies sei anhand der nachfolgenden Figuren 8 bis 10 verdeutlicht:
**Fig. 8** zeigt ein Ausführungsbeispiel eines Verstellmechanismus 70 zur Vertikalisierung des Matratzenrahmens 21 um z.B. 90° in einer Seitenansicht.

Um einen bettpflichtigen Patienten 90 möglichst am Limit seines eigenen Könnens zu rehabilitieren sollten dessen Füße 94 immer so viel seines Körpergewichts tragen wie möglich und so möglich selbst zu einer Gehbewegung, Schrittbewegung und/oder Treppensteigen-simulierende Bewegung beitragen. Damit die Füße 94 mit dem Druck des eigenen Körpergewichts belastet werden ist es notwendig, den bettpflichtigen Patienten 90 in eine vertikale Lage zu bringen. Um sicherzustellen, dass die Fußsohlen 95 des bettpflichtigen Patienten 90 schon vor Beginn seiner Vertikalisierung Kontakt mit den Trittflächen 24 des Fußmoduls 40 haben ist bevorzugt, noch vor Beginn der Vertikalisierung die Füße 94 des Patienten 90 mit dem Fußmodul in Wirkverbindung zu bringen. Gleiches gilt für die Wirkverbindung der Kniegelenke 93 mit dem Kniemodul 50. Der Vertikalisierungsgrad (zwischen 0 Grad = liegend und 90 Grad = aufrecht stehend) sollte als ein Parameter der planmäßig automatisierten Rehabilitation vom verantwortlichen Physiotherapeuten frei eingestellt werden können, also nicht nur bei 90° sondern insbesondere auch bei 45° oder 60° oder 75° oder beliebigen anderen Zwischenstufen. Für die Verstellung des Matratzenrahmens 21 zumindest zwischen einer horizontalen und einer vertikalen Position umfasst ein erfindungsgemäßes Bett 10 daher einen geeignet ausgebildeten, am Matratzenrahmen 21 angreifenden Verstellmechanismus 70, mittels welchem bevorzugt auch alle anderen förderlichen Positionen als eine horizontale oder vertikale Position einnehmbar sind, und aus welchen Positionen der Matratzenrahmen 21 jederzeit in eine horizontale Position rückführbar ist. Für die Verstellung des Matratzenrahmens 21, welcher über ein Gelenk mit dem Bettrahmen 11 verbunden ist, kann der Verstellmechanismus 70 elektromotorische und/oder hydraulische Mittel umfassen, welche beispielsweise über einen Winkel-Regelungsmechanismus angetrieben den Matratzenrahmen 21 samt Matratze 20 und darauf fixiertem Patienten 90 auf den geplanten Vertikalisierungsgrad anhebt. Die dann vertikalisiert eingenommene Lage erlaubt dem Patienten 90 vorteilhaft auch, sein Herz-Kreislaufsystem 91 zu trainieren und dieses durch die Einstellung des Vertikalisierungsgrades entsprechend seines individuellen Heilungsfortschrittes optimal zu belasten.

**Fig. 9** zeigt ein erstes Ausführungsbeispiel eines Stabilisierungsmechanismus 80 bei einem bevorzugten Vertikalisierungsgrad von z.B. 60° in einer Seitenansicht. Erkennbar ist, wie bis zur planmäßig vorgegebenen Vertikalisierung die Kniegelenke 93 des Patienten 90 möglichst in maximaler Extension (d.h. voll durchgestreckt) fixiert sind. Dies verhindert vorteilhaft ein Abgleiten des Patienten 90 durch Einknicken der Kniegelenke 93 während des Vorgangs der Vertikalisierung. Dabei verlagert sich die Gewichtskraft des Patienten 90 langsam in Richtung der Füße 94. Eine insb. bei Intensivbetten typischerweise vorgesehene (nicht dargestellte) medizinische Überwachungs- und/oder Versorgungsapparatur kann, falls benötigt, am Bettrahmen 11 des Bettes 10 befestigt und/oder zusammen mit dem Matratzenrahmen 21 vertikalisiert werden.

Um insbesondere mit zunehmender Vertikalisierung eines bettpflichtigen Patienten 90 zum einen ein Hinausfallen des Patienten 90 aus dem Bett 10 zu verhindern ist es erforderlich, den bettpflichtigen Patienten 90 bezüglich der Matratze 20 geeignet zu stabilisieren.

In einer bevorzugten Ausgestaltung des erfindungsgemäßen Bettes 10 umfasst der Stabilisierungsmechanismus 80 daher eine Hüftfixierung 81, mittels welcher die Hüfte des bettpflichtigen Patienten 90 zur Matratze 20 fixierbar ist.

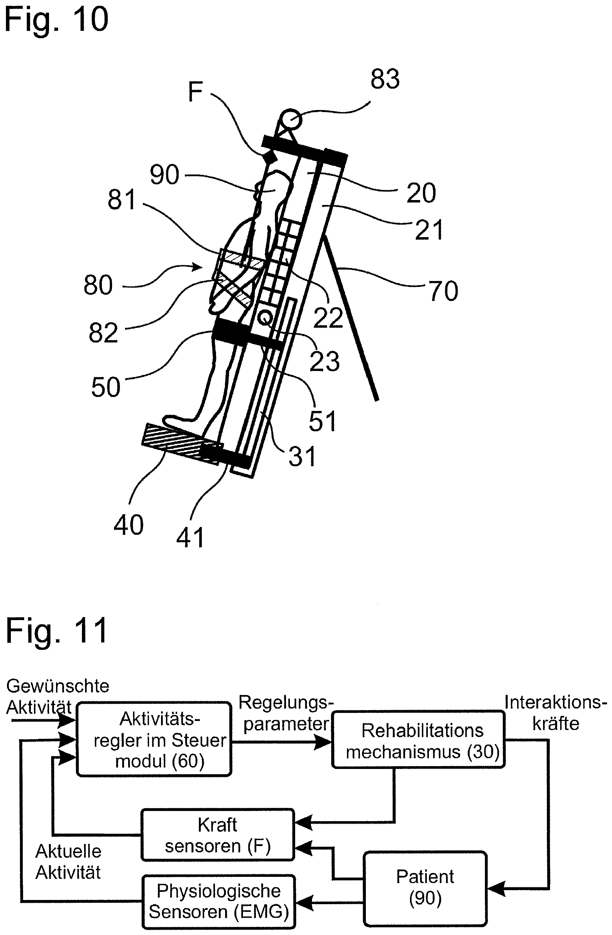

**Fig. 10** zeigt ein zweites Ausführungsbeispiel eines Stabilisierungsmechanismus 80 bei einem bevorzugten Vertikalisierungsgrad von z.B. 75° in einer Seitenansicht.

Um zum anderen in einer vertikalisierten Lage eine zumindest teilweise Entlastung des Körpergewichts zu ermöglichen ist es erforderlich, das Körpergewicht des bettpflichtigen Patienten 90 nicht nur über dessen Beine 92 sondern teilweise auch über den Stabilisierungsmechanismus 80 zur Erzielung einer planmäßigen Körpergewichtsentlastung tragen zu lassen. Die über die Beine 92 des Patienten 90 zu tragende Menge an Körpergewicht sollte als ein weiterer Parameter der planmäßig automatisierten Rehabilitation vom verantwortlichen Physiotherapeuten frei eingestellt werden können, vorzugsweise zwischen voll entlastet (0 kg) und voll belastet (volles Körpergewicht). In einer bevorzugten Ausgestaltung eines erfindungsgemäßen Bettes 10 umfasst der Stabilisierungsmechanismus 80 daher einen den bettpflichtigen Patienten 90 aufnehmenden Halterungsgeschirr 82, eine mit dem Halterungsgeschirr 82 und dem Matratzenrahmen 21 kopfseitig verbundene Seilwinde 83 und einen Sensor F, mittels welchen die Eigengewichtskraft auf den Beinen 92 des bettpflichtigen Patienten 90 aussteuerbar ist. Der Sensor F kann - wie dargestellt - mit der Seilwinde 83 wirkverbunden sein. Alternativ oder kumulativ dazu kann aber auch ein dem Fußmodul 50 zugeordneter Kraftsensor F die Signaldaten liefern, welche das Steuermodul 60 für die Aussteuerung des Körpergewichts benötigt, die auf den Füßen 94 des Patienten 90 lasten soll.

Den Ausführungsbeispielen gem. Fig. 9 und 10 ist gemein, dass der jeweilige Stabilisierungsmechanismus 80 mit mechanischen Endpunkten (End-stops) in Wirkverbindung stehen kann, welche insb. ein Herausfallen oder anderweitige Schädigungen des Patienten 90 z.B. aufgrund eines plötzlichen Öffnen und/oder Absacken des Stabilisierungsmechanismus 80 verhindern.

Im täglichen Gebrauch soll die Matratze 20 eines Bettes 10 für bettpflichtige Patienten 90 verhindern, dass bettpflichtige Patienten 90 sich wund liegen oder gar Druckgeschwüre (Dekubitus) entwickeln. Zur Vorbeugung dessen sollte die Matratze 20 geeignet weich ausgebildet sein. Neben geeigneten Schaumstoffen ist eine Anordnung insbesondere ganz oder teilweise mit Luft füllbarer Kammern 22 in der Matratze 20 bevorzugt (so in den Figuren 1 und 8 bis 10 gezeigt). Andererseits soll, insbesondere bei einem als Intensivbett ausgebildeten Betts 10, die Matratze 20 auch für eine bedarfsweise sofortige manuelle Reanimation zumindest von Herz- und/oder Lunge im Thorax 91 intensivpflichtiger Patienten 90 geeignet ausgebildet sein. In einer bevorzugten Ausgestaltung eines insbesondere als Intensivbett ausgebildeten Bettes 10 umfasst dessen Matratze 20 daher einen Mechanismus 23 zur Notfall-Verhärtung, also zur Änderung des Härtegrades der Matratze 20 als Widerlager zumindest im Bereich des Thorax 91 des intensivpflichtigen Patienten 90 im Fall des Erfordernisses einer sofortigen manuellen Reanimation von Herz und/oder Lunge. Eine mögliche Lösung, um die Matratze 20 eines als Intensivbett geeigneten Bettes 10 in kurzer Zeit zu verhärten, ist es, eine Matratze 20 zu verwenden, welche zumindest im Bereich des Thorax 91 des intensivpflichtigen Patienten 90 ganz oder teilweise mit Luft fühlbare Kammern 22 aufweist. Durch Ablassen der Luft wird die Matratze 20 schnell hinreichend hart, um als Widerlager für Reanimationsmaßnahmen wie insbesondere der Durchführung einer Herz-Lungen-Massage, dienen zu können. Ein Ablassen der Luft kann unter Normalbedingungen mittels einer Vakuumpumpe (nicht dargestellt) erfolgen. Bei Stromausfall kann das mechanisch-manuelle Öffnen einer größeren Öffnung in der Auflagenumhüllung (z.B. mehrere Zentimeter Durchmesser) vorgesehen sein, so dass unter dem Gewicht des intensivpflichtigen Patienten 90 die Luft aus den Kammern 22 der Matratze 20 weicht.

Um in einem Notfall den Matratzenrahmen 21 eines insbesondere als Intensivbett ausgebildeten Bettes 10 in die horizontale Position rückführen zu können, ist in einer bevorzugten Ausgestaltung eines solchen Bettes 10 ein Mechanismus 71 zur Notfall-Horizontalisierung des Matratzenrahmens 21 vorgesehen. Der Mechanismus 71 zur Notfall-Horizontalisierung umfasst vorzugsweise zumindest einen Notfall-Hebel 72, der beispielsweise kopf- und/oder fußseitig am insbesondere als Intensivbett ausgebildeten Bett 10, beispielsweise symmetrisch links und rechts davon und insbesondere mit einem Fuß 94 bedienbar, angeordnet ist. Durch Betätigung des Notfall-Hebels 72 kann in kurzer Zeit (beispielsweise in nur ca. 5 Sekunden) ein schnelles Herabsenken des Matratzenrahmens 21 in die Horizontale veranlasst werden. Wenn die Matratze 20 einen Mechanismus 23 zur Notfall-Verhärtung umfasst, kann dieser ebenfalls bevorzugt durch Betätigung des Notfall-Hebels 72 wie beschrieben aktiviert werden. Darüber hinaus kann vorgesehen sein, in einem Notfall den Rehabilitationsmechanismus 30, d.h. das Fuß- 40 also auch das Kniemodul 50 unverzüglich in Positionen zu stoppen, in den beide Beine 92 des Patienten 90 gestreckt sind. Der Notfall-Hebel 72 ist bevorzugt mit den elektromotorischen und/oder hydraulischen Mittel wirkverbunden und gestattet auch bei Stromausfall die Aktivierung einer Notfall-Horizontalisierung, vorzugsweise mechanisch durch eine weitere Betätigung des Notfall-Hebels 72, insbesondere durch noch tieferes Durchdrücken, oder durch Ziehen. Wenn die Verstellung des Matratzenrahmens 21 eines insbesondere als Intensivbett ausgebildeten Bettes 10 mittels Elektromotoren durchgeführt wurde, kann die Notfall-Horizontalisierung unter Normalbedingungen mittels der Elektromotoren durchgeführt werden. Um auch bei Stromausfall eine Notfall-Horizontalisierung durchführen zu können sind nicht-selbsthemmend bzw. rückfahrbare ("backdrivabIe") Motoren bevorzugt. Wenn die Verstellung des Matratzenrahmens 21 eines insbesondere als Intensivbett ausgebildeten Bettes 10 mittels hydraulischer Systeme durchgeführt wurde, sollte unter Normalbedingungen auch die Hydraulik ein schnelles Herabsenken des Matratzenrahmens 21 ermöglichen. Hierfür können hydraulische Ventile verwendet werden, welche die Druckzylinder des hydraulischen Systems schnell, aber kontrolliert entladen. Bei Stromausfall können die Ventile beispielsweise durch Betätigung des oben erwähnten Notfall-Hebels 72 manuell geöffnet werden.

Damit bett- oder insbesondere intensivpflichtige Patienten 90 bei einem schnellen Herabsenken des Matratzenrahmens 21 nicht mit unnötigen Kräften belastet werden, können der Elektromotor und/oder ein damit verbundenes Getriebe des Verstellmechanismus 70 so ausgelegt werden, dass eine vordefinierte Winkelgeschwindigkeit nicht überschritten wird. Alternativ oder kumulativ dazu kann auch ein Feder-Dämpfersystem vorgesehen sein, welches im Notfall die Motoren von einer Mechanik entkoppelt und ein schnelles, aber kontrolliertes Horizontalisieren des Matratzenrahmens 21 ermöglicht. In einer bevorzugten Ausgestaltung eines insbesondere als Intensivbett ausgebildeten Bettes 10 umfasst der Verstellmechanismus 70 daher einen elektronischen Winkelmesser 73, welcher die elektromotorischen und/oder hydraulischen Mittel des Verstellmechanismus 70 auf vorgebbare Sollwinkel und/oder Winkelgeschwindigkeiten aussteuert.

Für eine planmäßig automatisierte Rehabilitation stellt ein verantwortlicher Therapeut oder vergleichbare Fachkraft sicher:
- dass das Kniemodul 50 korrekt unterhalb der Kniegelenke 93 positioniert und am Bett- 22 oder Matratzenrahmen 21 festgesetzt und ggf. elektrisch und/oder hydraulisch verkabelt ist;
- dass das Fußmodul 40 korrekt mit den Füßen 94 des Patienten 90 verbunden sind, am Bett- 22 oder Matratzenrahmen 21 festgesetzt und ggf. elektrisch verkabelt ist; und
- dass der Stabilisierungsmechanismus 80 korrekt angebracht ist.

Über das Steuermodul 60 (vgl. sogleich Fig. 11) steuert der Therapeut den gewünschten Vertikalisierungswinkel. Dann wählt der Therapeut die gewünschte Schrittgeschwindigkeit und startet die Rehabilitationsbewegungen. Das Steuerungsmodul 60 regelt dabei das Zusammenspiel von Fußmodul 40 mit dem Kniemodul 50 so, dass die Beine 92 des Patienten 90 in zyklischen Bewegungen gebracht werden, insbesondere wie folgt: während das Kniegelenk 93 des linken Beines 92 durch das Kniemodul 50 abgeknickt wird, führt das Fußmodul 40 mit dem linken Fuß 94 eine Sprunggelenksextension durch. Gleichzeitig wird das Kniemodul 50 am rechten Kniegelenk 93 eine Streckung des Kniegelenks 93 durchführen und das rechte Fußmodul 40 führt eine Sprunggelenksflexion durch. Die Fixierungen am Kniegelenk 93 und die Stabilisierungsmechanismen 80 sorgen dafür, dass der Patient 90 das rechte Bein 92 durchgestreckt hat und dadurch mit dem rechten Bein 92 seine Gewichtskraft ganz oder teilweise trägt. Durch Alternierung dieses Vorganges zwischen dem linken und rechten Bein 92 werden abwechselnd das linke und das rechte Bein 92 be- und entlastet, indem ein Kniegelenk 93 durchgestreckt wird während das andere Kniegelenk 93 gebeugt wird.

**Fig. 11** schließlich zeigt beispielhaft ein Regelungsschema des Steuermoduls 60 zur Aussteuerung planmäßiger Rehabilitationsbewegungen. Demgemäß kann eine gewünschte Aktivität z.B. von einem Therapeuten oder einer vergleichbaren Fachkraft eingestellt werden. Diese gewünschte Aktivität kann nun im Steuermodul 60 mit der aktuell von bettpflichtigen Patienten 90 aufgebrachten Aktivität verglichen werden. Die aktuell von Patienten 90 aufgebrachte Aktivität berechnet sich aus dem Unterschied zwischen dem, was der Patient 90 selbst an Rehabilitationsbewegungen erzeugt, und den Kräften, die der Rehabilitationsmechanismus 30 mit dem Patienten 90 austauscht. Daraus kann das Steuermodul 60 die erforderlichen Regelungsparameter berechnen, welche bestimmen, wie viel Kraft der Rehabilitationsmechanismus 30 in welche Richtung, zu welcher Zeit, mit welcher Amplitude, etc. erzeugt. Diese Kräfte wirken dann über das Fuß- 40 und/oder Kniemodul 50 des Rehabilitationsmechanismus 30 auf den Patienten 90 ein. Da das Steuermodul 60 des Rehabilitationsmechanismus 30 weiß, wie groß die von ihr selbst erzeugten Kräfte sind, kann es berechnen, wie groß die Kräfte sind, die der Patient 90 selbst erzeugt. Die vom Patienten 90 selbst erzeugten Kräfte und deren Richtung werden von den in ihrer Position bekannten Kraftsensoren F gemessen.

Kumulativ dazu können weitere Messungen vorgenommen oder Überwachungsdaten herangezogen werden. So können am Patienten 90 sog. physiologischen Sensoren vorgesehen sein, die z.B. die Muskelaktivität (EMG) messen können, insbesondere zwecks Überprüfung der im Steuermodul 60 berechneten Muskelkräfte F, die der bettpflichtige Patient 90 selbst erbringt. Darüber hinaus können physiologische Größen wie die Herzfrequenz oder andere Vitalparameter des Patienten 90 gemessen und insb. auf ein gewünschtes Niveau geregelt werden, indem beispielsweise der Vertikalisierungsgrad des Matratzenrahmens 21 angepasst wird. Dies ist insbesondere bei Intensivbetten regelmäßig nicht möglich. So kann neben den Rehabilitationszielen zugleich für die Sicherheit des Patienten 90 Sorge getragen werden, indem die Rehabilitation noch vor dem Entstehen körperlicher Überlastung entweder abgebrochen oder soweit vereinfacht wird, dass der Patient 90 weniger körperliche Belastung erfährt. Insbesondere kann der Grad der Vertikalisierung reduziert werden, falls die Herzfrequenz des Patienten 90 zu stark ansteigt oder sinkt.

Das Steuermodul 60 umfasst bevorzugt eine Bedien- und Anzeigeeinheit, von der aus die oben beschriebenen Funktionen bedient werden können.

Über die Bedieneinheit können bevorzugt einige oder alle der folgenden Vorgänge vom Therapeuten gesteuert bzw. an die therapeutischen Bedürfnisse und Fähigkeiten des Patienten 90 angepasst werden:
- die Vertikalisierung (insb. zwischen 0 Grad bis 90 Grad);
- die Gewichtsentlastung (insb. zwischen 0% bis 100% des Patientengewichts);
- die Schrittfrequenz (insb. zwischen 0 Hz bis ca. 2.0 Hz oder weniger wie 1.5 Hz);
- der Bewegungsradius insbesondere der Kniegelenke 93;
- die Menge an Unterstützungskraft, welche der Rehabilitationsmechanismus 30 dem Patienten 90 zur Unterstützung der Bewegungsdurchführung anbietet (insb. zwischen 0% = der Patient bewegt seine Beine selbständig; bis 100% = der Patient wird komplett vom System bewegt);
- die Menge an körperlicher Aktivität (Eigenleistung), die der Patient 90 erbringt;
- die Überwachung der Herzfrequenz des Patienten 90;
- weitere technische und klinische Parameter.

Die Anzeigeeinheit zeigt insbesondere den aktuellen Status des Rehabilitationsmechanismus 30 an, insb.: ist-Vertikalisierung, ist-Gewichtsentlastung, ist-Aktivität, etc ...

Darüber hinaus steht die Bedien- und Anzeigeeinheit des Steuermoduls 60 bevorzugt auch mit den Notfallmechanismen 23 und/oder 71 etc. in Wirkverbindung.

Des Weiteren kann das Steuermodul 60 einen Historienspeicher umfassen, welcher die signifikanten Parameter der planmäßig durchgeführten Rehabilitation wie insb. den Vertikalisierungswinkel, die Menge Gewichtsentlastung, die Aktivität und damit verbundene Parameter und/oder die zeitliche Dauer aufzeichnet. Durch beispielsweise zählen der Beuge- und Streckvorgänge der Kniegelenke 93 kann die Schrittzahl berechnet werden und als klinischer Parameter gespeichert werden.

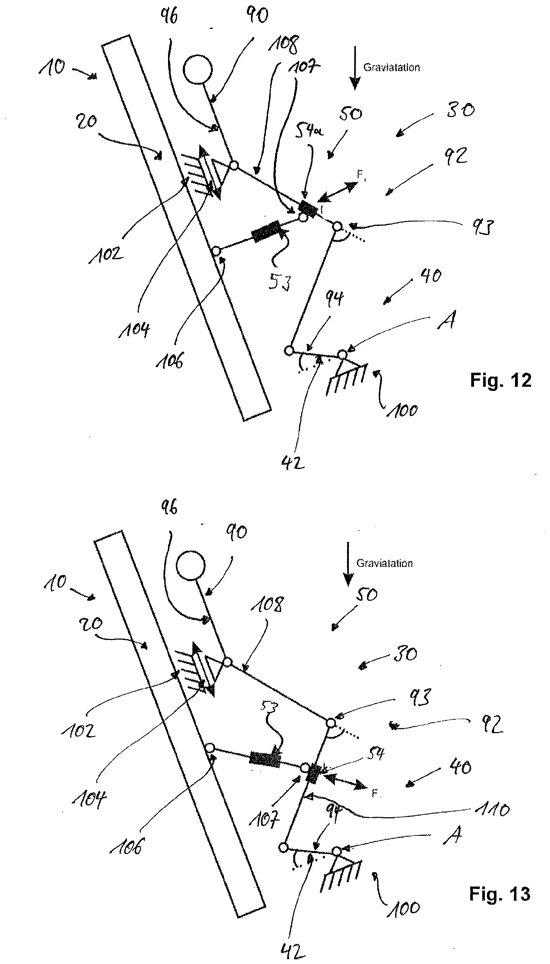

Die Figuren 12 bis 15 zeigen vier weitere schematische Ausführungsbeispiele eines Betts 10 samt Rehabilitationsmechanismus 30. Das Bett 10 weist wie in den vorherigen Ausführungsbeispielen eine Matratze 20 auf, die einteilig ist, also keine Ausnehmungen, Schlitze oder dergleichen aufweist. Der Rehabilitationsmechanismus 30 weist ein Fußmodul 40 und ein Kniemodul 50 auf. Der Patient 90 ist schematisch dargestellt und die Füße 94 des Patienten 90 sind an dem Fußmodul 40 angeordnet. Alle vier dargestellten Ausführungsbeispiele des Systems, umfassend das Bett 10 und den Rehabilitationsmechanismus 30, sind so ausgebildet, dass die von dem Patienten 90 ausgeführte Rehabilitationsbewegung eine Gehbewegung, Schrittbewegung und/oder Treppensteigen-simulierende Bewegung ist. Dazu sind die Füße 94 des Patienten jeweils auf Trittflächen 42 fixiert. Die Trittflächen 42 sind um eine Achse A drehbar angeordnet. Die Achse A ist ortsfest, wie durch das Festlager 100 illustriert wird. Die Trittflächen 42 sind jeweils unabhängig voneinander verschwenkbar. Es kann auch vorgesehen sein, dass die Trittflächen 42 mit einem Mechanismus so verbunden sind, dass diese stets gegenläufig bewegbar sind, um so die Gehbewegung, Schrittbewegung und/oder Treppensteigen-simulierende Bewegung zu unterstützen.

Der Fuß 94 des Patienten 90 ist so auf der Trittfläche 42 angeordnet, dass die Zehen in der Nähe der Achse A sind. Dies ist bei allen vier Ausführungsbeispielen (Figur 12 bis Figur 15) identisch ausgebildet. Ebenso ist allen vier Ausführungsbeispielen gemein, dass der Patient 90 mit seinem Rücken 96 auf einem Gleitlager 102 aufliegt bzw. dies mit der Matratze 20 bildet. Dies ist durch den Pfeil 104 angedeutet; der Patient 90 kann mit seinem Rücken 96 auf der Matratze 20 "hoch und runter" rutschen. Alternativ könnte auch vorgesehen sein, dass der Patient mit seinem Rücken 96 ortsfest auf der Matratze 20 liegt, und stattdessen das Lager 100 als Gleitlager ausgebildet ist und dieselbe Richtung wie der Pfeil 104 bewegbar ist. In der Regel wird aber schon das Anhebend er Ferse in Verbindung mit einem Drehen um eine Achse A, die in einer Ebene ein Stück vor den Zehen liegt ausreichen, die Knie zu beugen ohne eine Verschieben des Fußmoduls 40 zum Patienten 90 hin oder Verrutschen des Patienten 90 auf der Matratze 20 notwendig zu machen.

Die Unterschiede der vier Ausführungsbeispiele gemäß den Figuren 12 bis 15 liegen insbesondere in der Betätigung des Kniemoduls 50 und werden im Folgenden beschrieben.

Gemäß **Fig. 12** ist das Kniemodul im Wesentlichen wie in den Figuren 5a bis 9 dargestellt, ausgebildet. Es stützt sich mit einem Auflager 106 auf der Matratze 20 ab und ist mit einer Manschette 54 mit dem Oberschenkel 108 knapp oberhalb des Knies 93 verbunden. Der Aktuator 53 ist so ausgebildet, dass der Abstand zwischen dem Auflager 106 und der Manschette 54 variiert. Die Manschette 54 ist dabei drehbar mit dem knieseitigen Ende 107 des Kniemoduls 50 verbunden. Insofern ist das Kniemodul 50 im Wesentlichen wie in den Figuren 5a bis 6 ausgebildet. Durch Betätigung des Aktuators 53 wird der Abstand des Angriffspunkts der Manschette 54 zur Matratze 20 verändert und so eine Schrittbewegung ausgeführt. Aufgrund der Befestigung des Fußes 94 auf der Trittfläche 42, welche schwenkbar um die Achse A gelagert ist, wird eine Abrollbewegung des Fußes 94 ausgeführt.

In **Fig. 13** ist eine ähnliche Ausführungsform gezeigt, wobei die Manschette 54 nicht am Oberschenkel 108 sondern am Unterschenkel 110 angeordnet ist, wiederum knapp unterhalb des Knies 93. Die Funktionsweise ist im Wesentlichen dieselbe. Durch Betätigung des Aktuators 53 wird der Abstand zwischen dem Auflager 106 und der Manschette 54 geändert, wodurch der Unterschenkel 110 von der Matratze 20 abgehoben wird, sodass eine Gehbewegung, Schrittbewegung und/oder Treppensteigen-simulierende Bewegung ausgeführt wird.

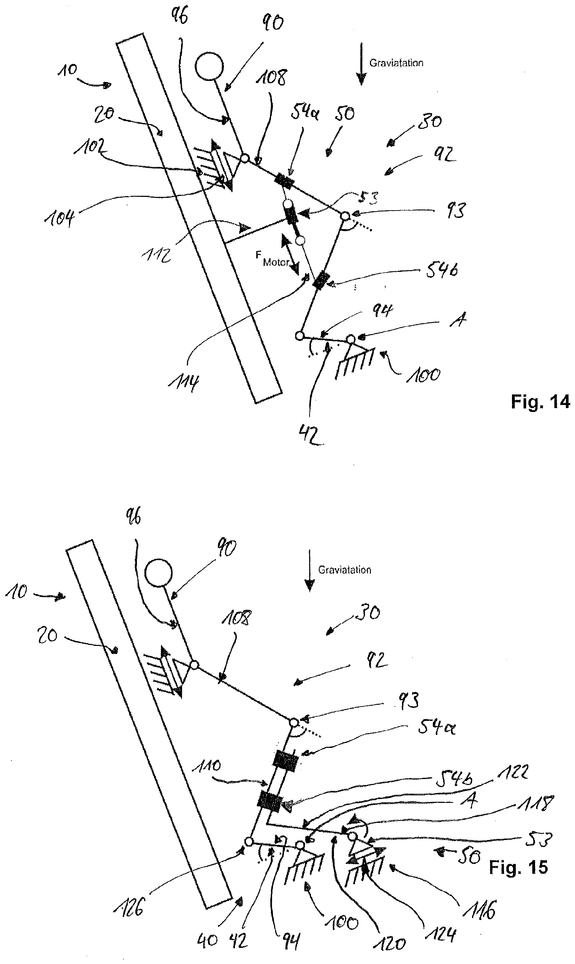

**Fig. 14** zeigt ein Ausführungsbeispiel, bei dem zwei Manschetten 54a, 54b für den Patienten 90 vorgesehen sind, wobei die Manschette 54a am Oberschenkel 108 befestigt ist und die Manschette 54b am Unterschenkel 110. Der Aktuator 53 ist mittels eines Gestells 112 auf der Matratze 20 abgestützt. Der Aktuator 53 ist mittels eines Getriebes 140 sowohl mit der Manschette 54a als auch mit der Manschette 54b gekoppelt und dazu ausgebildet, den Abstand im Wesentlichen parallel zur Matratze zwischen diesen beiden Manschetten 54a, 54b zu verändern, um so eine Gehbewegung, Schrittbewegung und/oder Treppensteigen-simulierende Bewegung als Rehabilitationsbewegung vorzusehen. Das Getriebe 114 kann beispielsweise mittels Teleskopstangen realisiert sein, oder durch eine Art Scherenmechanismus. Dies ist besonders vorteilhaft, wenn der Patient sehr schwach ist und die Rehabilitationsbewegung kaum selbständig ausführen kann. Ein Scherenmechanismus hat zudem den Vorteil, dass die Kräfte nicht über lange Hebelarme übertragen werden müssen. Dies führt zu einer geringeren mechanischen Belastung des Systems. Aufgrund der zwei Manschetten 54a, 54b können die Kräfte, welche benötigt werden um das Bein zu strecken und zu beugen, auf Ober- und Unterschenkel verteilt werden. Es soll verstanden werden, dass auch bei allen anderen Ausführungsbeispielen zwei Manschetten vorgesehen sein können, auch wenn nur eine gezeigt ist. Dadurch kann die Kraft, welche auf Oberschenkel und Unterschenkel wirkt kleiner sein als wenn dieselbe Kraft nur auf Oberschenkel oder Unterschenkel aufgebracht werden. Weiterhin ist diese Mechanik weit weg von den Händen des Patienten. Die Gefahr einer Verletzung aufgrund von Einklemmen ist daher verringert.

In **Fig. 15** ist ein weiteres Ausführungsbeispiel gezeigt, bei dem das Kniemodul 50 ausschließlich am Unterschenkel 110 des Patienten angreift. Gemäß diesem Ausführungsbeispiel weist das Kniemodul 50 einen Winkel 118 auf, der einen ersten Schenkel 120 und einen zweiten Schenkel 122 aufweist. Die beiden Schenkel erstrecken sich etwa in einem rechten Winkel zueinander, wobei der erste Schenkel sich oberhalb des Fußes 94 des Patienten 90 erstreckt, und der zweite Schenkel 122 im Wesentlichen entlang des Unterschenkels 110. Der zweite Schenkel 122 ist mittels beiden Manschetten 54a, 54b mit dem Unterschenkel fixiert. Der erste Schenkel 118 ist mit dem Aktuator 53 gekoppelt, der eine Drehbewegung auf den Winkel 118 aufbringt. Der Aktuator 53 selbst ist auf einem Gleitlager 116 befestigt, sodass er sich in Richtung des Pfeils 124 bewegen kann, auch wenn dies nicht zwingend erforderlich ist. Auf diese Weise lässt sich besonders gut eine Gehbewegung, Schrittbewegung und/oder Treppensteigen-simulierende Bewegung als Rehabilitationsbewegung durchführen. Insbesondere sind ein Abrollen und ein Aufbringen von Momenten im Sprunggelenk 126 vorteilhaft ausführbar. Wie sich aus Figur 15 ergibt, erstreckt sich der Schenkel 120 des Winkels 122 über den Fuß 94 hinaus, sodass das Lager 116 unterhalb des Fußes 94 angeordnet ist.

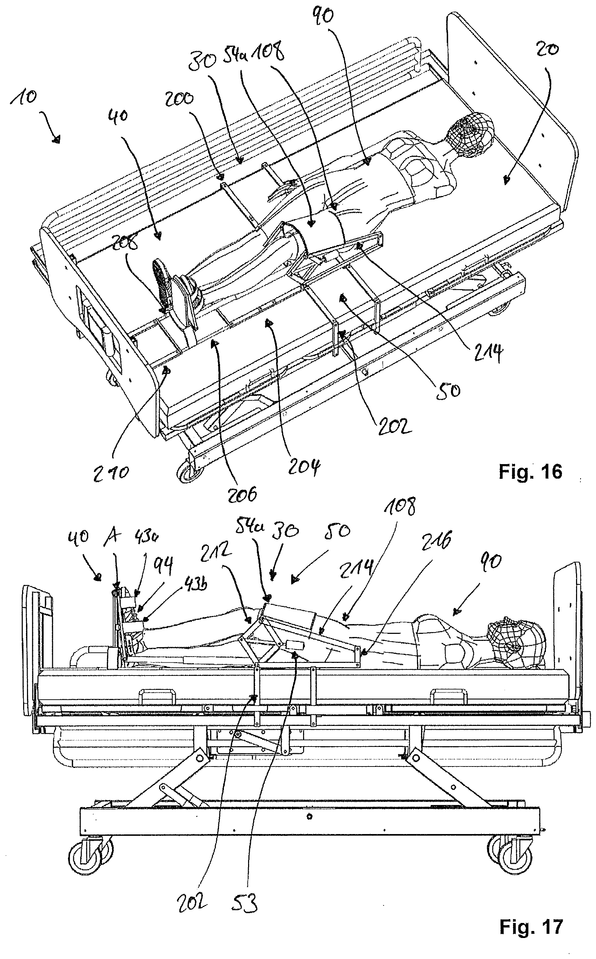

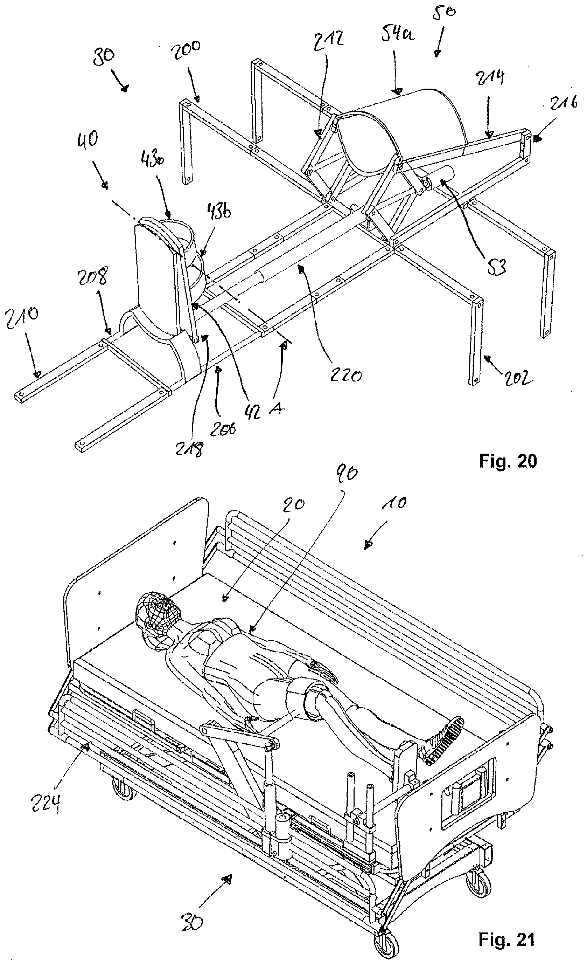

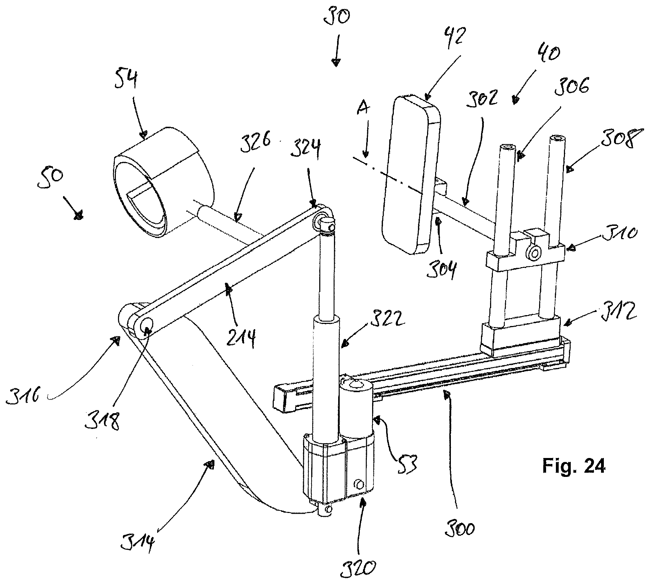

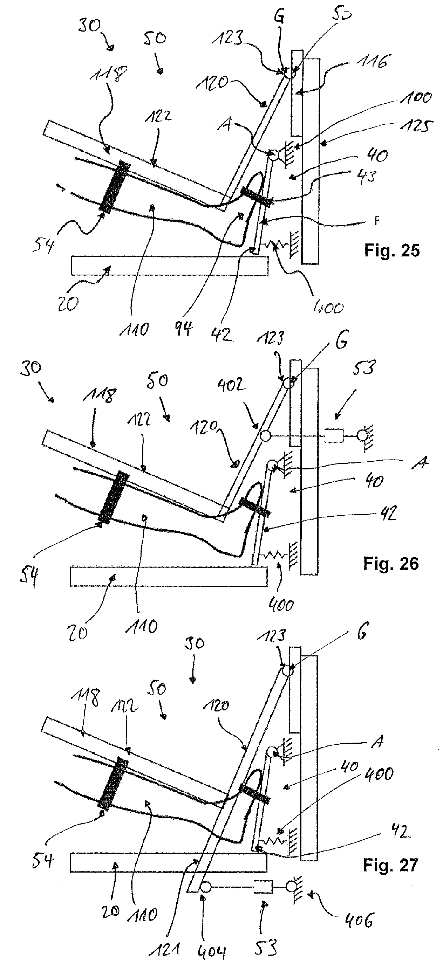

Während die Figuren 12 bis 15 verschiedene Ausführungsbeispiele rein schematisch illustrieren, zeigen die Figuren 16 bis 27 detailliertere Ansichten dieser Ausführungsbeispiele. Die Figuren 16 bis 20 zeigen im Wesentlichen ein Ausführungsbeispiel wie es in etwa Fig. 14 entspricht, jedoch mit nur einer Manschette, die Figuren 21 bis 24 zeigen ein Ausführungsbeispiel wie es in etwa Fig. 12 entspricht und die Figuren 25 bis 27 zeigen ein Ausführungsbeispiel wie es in etwa Fig. 15 entspricht.

Gleichwohl ähnliche Elemente sind mit gleichen Bezugszeichen versehen und insofern wird vollumfänglich auf die obige Beschreibung Bezug genommen. Im Nachfolgenden wird im Wesentlichen auf die Besonderheiten der einzelnen Ausführungsbeispiele eingegangen und deren Unterschiede zu den vorherigen Ausführungsbeispielen dargestellt.

In **Fig. 16** ist ein Bett 10 mit Matratze 20 und Patient 90 dargestellt. Der Rehabilitationsmechanismus 30 ist lösbar an dem Bett 10 befestigt und stützt sich seitlich an der Matratze mit zwei Streben 200, 202 ab. Mittels dieser Streben 200, 202 ist der Rehabilitationsmechanismus 30, insbesondere das Kniemodul 50, relativ zum Patienten 90 ausrichtbar. Das Fußmodul 40 ist gemäß diesem Ausführungsbeispiel mit dem Kniemodul 50 mittels eines Schienensystems 204 gekoppelt, welches einerseits relativ zum Kniemodul 50 verschiebbar ist, andererseits eine Führung des Fußmoduls 40 auf den zwei Schienen 206, 208 erlaubt. Das Fußmodul 40 ist mittels einer weiteren Strebe 210 fußseitig an der Matratze 20 befestigt.

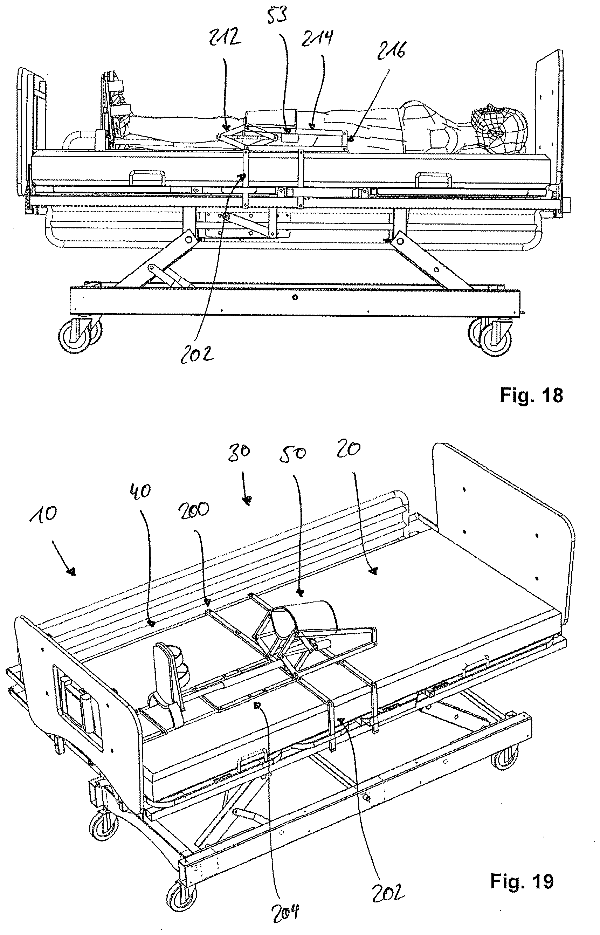

Der Rehabilitationsmechanismus 30 umfasst hier einen am Kniemodul 50 angeordneten Motor 53 der am besten in **Fig. 20** zu erkennen ist. Der Motor 53 ist mit einem Scherenmechanismus 212 gekoppelt, der wiederum eine Oberschenkelstrebe 214 welche ihrerseits mit einem Ende schwenkbar an einem Ausleger 216 angeordnet ist, verschwenkt. Die Oberschenkelstrebe 214 erstreckt sich im Wesentlichen entlang des Oberschenkels 108 des Patienten 90 und endet etwa auf Hüfthöhe. Die Oberschenkelstrebe 214 trägt eine Manschette 54a, die um den Oberschenkel 108 angeordnet ist um diesen relativ zum Mechanismus 212 zu fixieren. Durch Betätigen des Motors 53 wird der Scherenmechanismus 212 verstellt und die Oberschenkelstrebe 214 zwischen einer horizontalen Position (siehe **Fig. 18**) und einer leicht verschwenkten Position (siehe **Fig. 17**) hin und her bewegt. Beim Anheben der Oberschenkelstrebe 214 wird gleichzeitig die Ferse des Fußes 94 des Patienten 90 angehoben. Das Fußmodul 40 ist so gestaltet, dass es ein Verschwenken um eine Achse A, die sich ein Stückchen vor den Zehen des Fußes 94 befindet erlaubt. So wird eine Gehbewegung simuliert. Da gleichzeitig das Fußmodul 40 auf den Schienen 206, 208 gleiten kann, ist auch ein "Anheben" des ganzen Fußes 94, bzw. Anziehen in Richtung der Hüfte, wie dies bei realistischen Gehbewegungen erfolgt, möglich, wenn die Oberschenkelstrebe 214 weit genug verschwenkt wird.

Der Fuß des Patienten 94 ist dabei mittels zweier Schlaufen 43a, 43b fixiert. Wie aus Fig. 20 ferner ersichtlich, ist zwischen der Trittfläche 42 genauer gesagt dem fersenseitigen Ende 218 der Trittfläche 42 und dem Kniemodul 50 ein Teleskopstab 220 angeordnet. Dieser Teleskopstab 220 kann als pneumatische Feder oder als mechanische Feder ausgebildet sein und zusätzlich eine Kraft auf die Fußsohle des Patienten aufbringen, indem die Trittfläche 42 in eine verschwenkte Position, d. h. in eine Position in der die Ferse des Fußes 94 des Patienten angehoben ist, vorbelastet wird. Auch dies fördert die Rehabilitation.

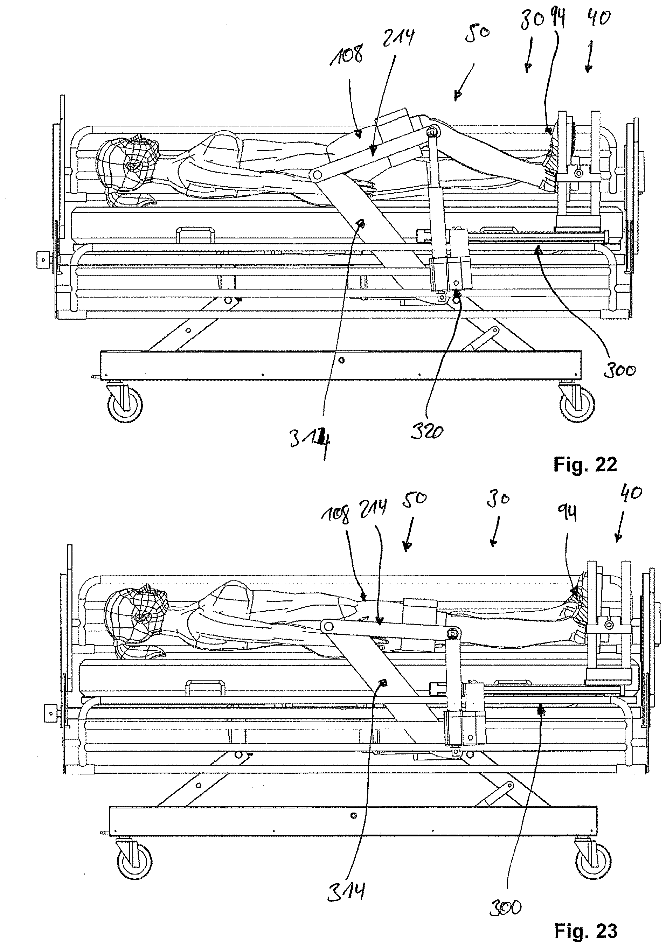

Die **Figuren 21 bis 24** zeigen eine Alternative. Bei dieser Alternative ist der Rehabilitationsmechanismus 30 so ausgebildet, dass er alleine von der Seite des Bettes 10 aus betrieben werden kann. Eine Anordnung des Mechanismus 30 unterhalb des Patienten 90 ist nicht erforderlich, wodurch ein Anheben des Patienten weitgehend vermieden ist. Der Rehabilitationsmechanismus 30 gemäß den Figuren 21 bis 24 wird auf einfache Weise an dem Rahmen 224 des Bettes 10 befestigt, beispielsweise mittels Klemmklauen oder dergleichen. Ein solcher Rahmen 224 ist in der Regel standardmäßig bei Kranken hausbetten vorgesehen, so dass die Montage des Rehabilitationsmechanismus 30 gemäß diesem Ausführungsbeispiel besonders einfach ist. Der Rehabilitationsmechanismus 30 (vergleiche Figuren 22 bis 24) weist eine Schiene 300 auf, die als Träger für das Kniemodul 50 und das Fußmodul 40 fungiert. Das Fußmodul 40 ist gemäß diesem Ausführungsbeispiel passiv ausgebildet und weist eine Trittfläche 42 auf, die an einer Strebe 302 mittels eines Lagers 304 schwenkbar gelagert ist. Die Trittfläche 42 ist entlang ihrer Längserstreckung, d. h. zwischen einem zeh- und einem fersenseitigen Ende relativ zur Strebe 302 verstellbar, um so eine Schwenkachse A einzustellen. Die relative Höhe der Schwenkachse A zur Schiene 300 ist über zwei Streben 306 und 308, an denen die Strebe 302 mittels einer Klemmverbindung 310 befestigt ist einstellbar. Mit einem Haltefuß 312 ist das Fußmodul 30 an der Schiene 300 befestigt und relativ an der Schiene in Richtung der Längserstreckung der Schiene 300 verstellbar.

Das Kniemodul 50 umfasst einen Träger 314, der sich in einem montierten Zustand in etwa bis zu einer Hüfte des Patienten 90 erstreckt. An dem hüftseitigen Ende 316 des Trägers 314 ist mittels einer Schwenklagerung 318 eine Oberschenkelstrebe 214 angeordnet, die sich im Wesentlichen entlang des Oberschenkels 108 des Patienten 90 erstreckt (vgl. Figur 22 und 23). Der Träger 314 ist über einen Korpus 320 wiederum mit der Schiene 300 verschieblich gekoppelt. Der Korpus 320 trägt einen Motor 53 der einen Kolben 322 antreibt, welcher wiederum mittels einer Schwenklagers 324 mit der Oberschenkelstrebe 212 verbunden ist und diese verschwenkt, um so das Knie 93 des Patienten anzuheben. Bei dieser Ausführungsform wird der Oberschenkel 108 mittels einer Manschette 54a, welche bei einer weiteren Strebe 326 mit der Oberschenkelstrebe 214 gekoppelt ist verbunden. Die Strebe 326 ist wiederum verschieblich an der Oberschenkelstrebe 214 festsetzbar. Wie sich aus dem Vergleich der Figuren 22 und 23 ergibt, wird über den Rehabilitationsmechanismus ein Verschwenken des Oberschenkels 108 bewirkt, wodurch wiederum ein Anheben der Ferse des Fußes 94 bewirkt wird, um so eine Gehbewegung, Schrittbewegung und/oder Treppensteigen-simulierende Bewegung zu erzeugen. Aufgrund der variablen Einstellbarkeit des Fußmoduls 40 gemäß diesem Ausführungsbeispiel lassen sich besondere Belastungsverhältnisse erzeugen. Wie sich weiterhin aus diesem Ausführungsbeispiel ergibt, ist der Rehabilitationsmechanismus 30 besonders einfach verstaubar und an anderen Betten 10 verwendbar, ohne den Patienten anheben zu müssen oder auf ein anderes Bett verlagern zu müssen. Weiterhin ist es auch möglich zwei solcher Mechanismen 30 mit dem Bett 10 zu koppeln, um so beide Beine des Patienten zeitgleich der Therapie zu unterziehen.

Die **Figuren 25 bis 27** zeigen weitgehend schematisch eine Anordnung eines Fußmoduls 40 und eines Kniemoduls 50 wie in Figur 15 dargestellt. Das Kniemodul 50 greift hier wie in Figur 15 ausschließlich am Unterschenkel 110 des Patienten an. Das Kniemodul 50 weist einen Winkel 118 auf, der einen ersten Schenkel 120 und einem zweiten Schenkel 122 aufweist. Es ist nicht zwingend erforderlich dass die beiden Schenkel 120, 122 im Wesentlichen rechtwinklig zueinander angeordnet sind, vielmehr kann der Winkel 118 auch als geschwungene Form ausgebildet sein. Wichtig ist allein, dass sich ein Abschnitt, der hier durch den Schenkel 122 gebildet wird, im Wesentlichen entlang des Unterschenkels 110 des Patienten erstreckt und das andere Ende, welches hier als Schenkel 120 ausgebildet ist, mittels eines Gelenks 123 um eine Achse schwenkbar an einer Abstützung 125, wie beispielsweise einem Bettrahmen oder dergleichen, abgestützt ist. Gemäß diesem Ausführungsbeispiel ist das Gelenk 123 an einem Gleitlager 116 angeordnet, auch wenn dies nicht zwingend erforderlich ist. Der Unterschenkel 110 des Patienten ist mittels einer Manschette 54 mit dem Schenkel 122 gekoppelt. Auf diese Weise wird eine Drehung des Unterschenkels 110 samt Fuß 94 um die Achse G, welche hier senkrecht auf der Zeichenebene steht, ermöglicht. In diesem Ausführungsbeispiel (Figur 25) ist in dem Gelenk 123 ferner ein Motor 53 vorgesehen, der den Winkel 118 rotierend um die Achse G antreibt.

Das Fußmodul 40 ist vorzugsweise passiv. Es weist eine Trittfläche 42 auf, die mittels eines Lagers 100 um eine Achse A schwenkbar gelagert ist. Das Lager 100 koppelt das Fußmodul 40 an die Abstützung 125. Der Fuß 94 ist mittels einer Schlaufe 43 an der Trittfläche 42 fixiert. Die Trittfläche 42 ist fersenseitig mittels einer Feder 400 vorgespannt, die als Druckfeder ausgebildet ist, so dass eine Kraft auf die Fußsohle des Fußes 94 ausgeübt wird, um eine Gehbewegung möglichst realistisch zu gestalten. Da der Fuß 94 nur mit einer Schlaufe 43 fixiert ist, ist eine Bewegung des Fußes relativ zur Trittfläche 42 möglich und die Ferse kann sich von dieser abheben, wie in Figur 25 dargestellt.

Die Figuren 26 und 27 zeigen alternative Antriebskonzepte. Während der Antriebsmotor 53 in Fig. 25 als Drehmotor ausgebildet ist, der direkt auf das Gelenk 123 wirkt, ist der Motor 53 gemäß Figur 26 als Linearantrieb ausgebildet und kann beispielsweise auch als pneumatischer oder hydraulischer Kolben ausgebildet sein. Der Motor 53 greift an einem Angriffspunkt 402, der sich etwa mittig am Schenkel 120 des Kniemoduls 50 befindet an. Auch mit diesem Motor 53 ist eine Rotation des Winkels 118 um die Achse G erreichbar.

Fig. 27 zeigt eine weitere Alternative der Betätigung des Kniemoduls 50. Der erste Schenkel 120 weist eine Verlängerung 121 auf, die sich (im montierten Zustand) bis unterhalb der Matratze 20 erstreckt. An dieser Verlängerung ist am Ende an einem Anlenkpunkt 404 der Motor 53 mit dem Schenkel 120 gekoppelt, wobei sich der Motor 53 wiederum an einer Abstützung 406, die ebenfalls unterhalb der Matratze 20 angeordnet ist, abstützt. Der Motor 53 ist im Wesentlichen entsprechend dem Motor 53 gemäß Fig. 26 ausgebildet und kann beispielsweise als pneumatischer Kolben ausgebildet sein. Diese Anordnung kann vorteilhaft sein, wenn der Rehabilitationsmechanismus 30 beispielsweise seitlich an einem Bett angeordnet wird.

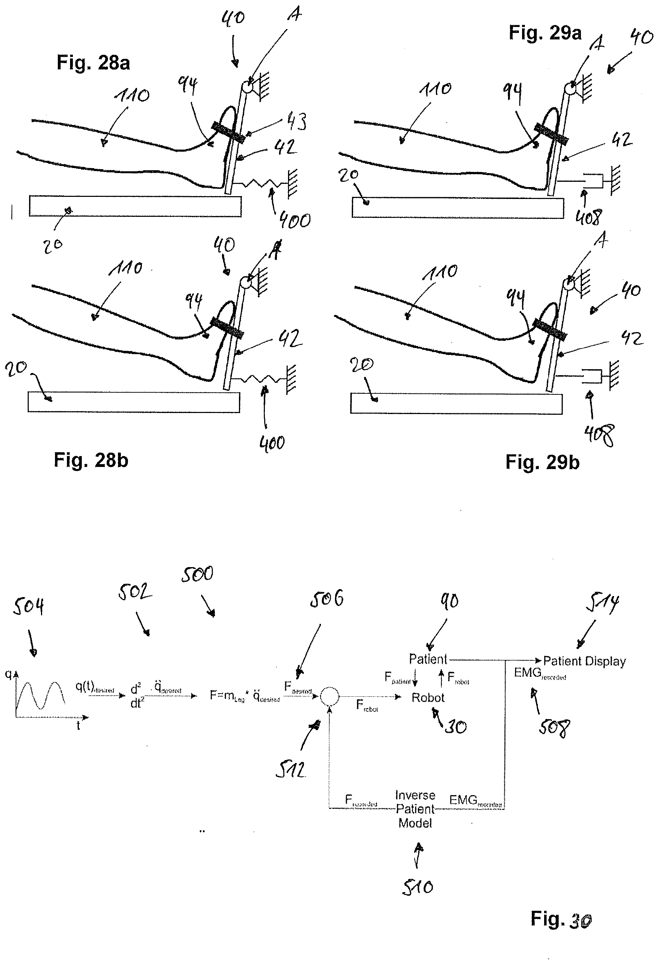

Die **Figuren 28a bis 29b** verdeutlichen nochmals die Freiheit des Fußes 94, wenn dieser auf der Trittfläche 42 des Fußmoduls 40 fixiert ist. Die Figuren 28a, 28b zeigen dies bei einem passiven Fußmodul 40 und die Figuren 29a, 29b bei einem aktiven Fußmodul 40. Gemäß Figuren 28a, 28b ist der Unterschenkel 110 samt Fuß 94 des Patienten dargestellt. Der Fuß 94 ist mittels einer Schlaufe 43 an der Trittfläche 42 fixiert. Die Trittfläche 42 ist schwenkbar mittels eines Gelenks um die Achse A fixiert. Fersenseitig ist die Trittfläche mittels einer Feder 400 belastet.

Wird nun wie in Fig. 28b dargestellt, ein (nicht gezeigtes) Kniemodul aktiviert, wird der Unterschenkel 110 verschwenkt und gleichzeitig der Fuß 94 um die Achse A gedreht. Um eine Verletzung des Patienten und eine größere Freiheit zu erlauben, kann sich die Ferse des Fußes 94 von der Trittfläche 42 lösen. Es kann dazu vorgesehen sein, dass die Feder 400 so ausgebildet ist, dass sie nur ein Rotieren um die Achse A in einem gewissen Bereich erlaubt. Das Abheben der Fußsohle des Fußes 94 von der Trittfläche 42 führt andererseits auch dazu, dass die Gehbewegung, Schrittbewegung und/oder Treppensteigen-simulierende Bewegung realistischer ist. Auch bei einem natürlichen Gehen wird der Fuß vom Boden abgehoben und eine Entlastung der Fußsohle findet statt. Dies wird auch mit dem gegenständlichen Fußmodul 40 erreicht.

Das gleiche gilt im Wesentlichen auch für Fußmodule 40 die wie in Figuren 29a, 29b dargestellt aktiv ausgebildet sind. Das Fußmodul 40 weist wiederum eine Trittfläche 42 auf die schwenkbar um die Achse A angeordnet ist. Im Unterschied zum Ausführungsbeispiel wie es in Fig. 28a, 28b ist hier jedoch die Feder 400 durch einen aktiven Motor 408 ersetzt, der wie es in diesem Ausführungsbeispiel als Linearmotor ausgebildet ist und beispielsweise durch einen pneumatischen oder hydraulischen Kolbenantrieb realisiert werden kann. Hierdurch ist eine gezielte Kraft über die Trittfläche 42 auf den Fuß 94 des Patienten übertragbar, um so eine noch bessere Schrittbewegung zu erzielen.

**Fig. 30** schließlich verdeutlicht einen Regelkreis bei einer EMG Regelung. Der Regelkreis 500 umfasst eine Vorsteuerung 502, in der eine in ein vorgegebenes Bewegungsprofil 504 über die Zeit in eine Kraftstellengröße 506 umgewandelt wird. Diese Kraftstellengröße 506 wird über den Rehabilitationsmechanismus 30 (hier als F Robot bezeichnet) mit dem Patienten 90 übertragen. Mittels einer EMG Messeinrichtung 508 wird die Reaktion des Patienten gemessen und über ein inverses Patientenmodell 510 in den Regelkreis an der Stelle 512 über eine Rückkopplung eingeschleift. Die gemessenen EMG Daten werden über eine Patientenanzeige 514 dem Patienten und/oder einem Therapeuten angezeigt. Der Therapeut kann dann das vorgegebene Bewegungsprofil 504 anpassen, um so eine besonders gute Rehabilitation des Patienten zu erreichen.

Die vorliegende Erfindung stellt einen gegenüber dem Stand der Technik verbesserten Rehabilitationsmechanismus 30 bereit, welcher sich problemlos in alle bekannten Klinikabläufe integrieren lässt, und zwar sowohl für insbesondere aufgrund orthopädischer, intensivmedizinischer und/oder neurologischer Aktivitätseinschränkungen bettpflichtig gewordener Patienten 90. Ohne diese Patienten 90 umbetten zu müssen gestattet die vorliegende Erfindung eine planmäßig automatisierte Rehabilitation zumindest der Gelenke, Muskeln und Sehnen der Beine 92 bettpflichtiger Patienten 90. Aufgrund seines modularen Aufbaus kann der Rehabilitationsmechanismus 30 schnell entfernt werden und ist weder im Notfall noch im Klinik Alltag hinderlich. Die Möglichkeit einer Belastung der Füße 94 ganz oder teilweise mit der Gewichtskraft des Patienten 90 trainiert weiterhin die Muskulatur und das Skelett und verhindert eine Degeneration des muskulo-skeletalen Systems. Eine Möglichkeit zur Vertikalisierung trainiert zudem das kardiovaskuläre System. Dies ist bei orthopädischen ebenso wie bei intensivpflichtigen oder neurologischen Patienten 90 gleich wichtig. Neben handelsüblichen oder eigens geschaffenen Pflege- oder Krankenbetten 10 ist ein Rehabilitationsmechanismus 30 nach der Erfindung leicht insbesondere auch in handelsüblichen oder eigens geschaffenen Spital- oder Intensivbetten 10 anbringbar und entfernbar, und zwar unabhängig davon, ob der bettpflichtige Patient 90 in dem jeweiligen Bett 10 ganz oder teilweise in eine vertikalisierte Lage gebracht werden kann, wobei in einer jeden vom bettpflichtigen Patienten 10 zwischen einer horizontal und einer vertikalisiert eingenommenen Lage der Rehabilitationsmechanismus 30 eine rhythmische Be- und Entlastung der Fußsohlen 95 bettpflichtiger Patienten 90 unterstützt.

## Patentansprüche

1. Rehabilitationsmechanismus (30), geeignet ausgebildet für eine planmäßig automatisierte Rehabilitation zumindest der Gelenke, Muskeln und Sehnen der Beine (92) eines bettpflichtigen Patienten (90), wenigstens umfassend
- ein in Wirkverbindung mit den Füßen (94) des bettpflichtigen Patienten (90) bringbares Fußmodul (40),
- ein in Wirkverbindung mit den Kniegelenken (93) des bettpflichtigen Patienten (90) bringbares Kniemodul (50), und
- ein Steuermodul (60) zur Aussteuerung planmäßiger Rehabilitationsbewegungen zumindest der Gelenke, Muskeln und Sehnen der Beine (92) des bettpflichtigen Patienten (90) mittels des Fuß- (40) und/oder des Kniemoduls (50);
**dadurch gekennzeichnet,**
- **dass** das Kniemodul (50) zur Aussteuerung einer planmäßigen Unterstützungskraft auf die Kniegelenke (93) des Patienten (90) eingerichtet ist;
- **und dass** zumindest das Kniemodul (50) als ein
- zwischen Patient (90) und Matratze (20) anordenbares,
- sich unmittelbar an einem Bett- (11) oder Matratzenrahmen (21) abstützendes und
- beidseitig der Längsseiten (12) des Bettes (10) festsetzbares Modul ausgebildet ist.

2. Rehabilitationsmechanismus (30) nach Anspruch 1, **dadurch gekennzeichnet, dass** die Rehabilitationsbewegung eine Gehbewegung, Schrittbewegung und/oder Treppensteigen-simulierende Bewegung ist.

3. Rehabilitationsmechanismus (30) nach Anspruch 1 oder 2, **dadurch gekennzeichnet, dass** neben dem Kniemodul (50) auch das Fußmodul (40) als ein oberhalb der Matratze (20) anordenbares, sich unmittelbar oder mittelbar an einem Bett- (11) oder Matratzenrahmen (21) abstützendes, Modul ausgebildet ist.

4. Rehabilitationsmechanismus (30) nach einem der vorherigen Ansprüche 1 bis 3, **gekennzeichnet durch** zwei Führungsschienen (31), von welchen je eine an Längsseiten (12) eines Bett- (11) oder Matratzenrahmens (21) montierbar sind.

5. Rehabilitationsmechanismus (30) nach Anspruch 4, **dadurch gekennzeichnet, dass** das Fuß- (40) wie auch das Kniemodul (50) geeignete Feststellmittel (41, 51) zur variablen Festsetzbarkeit entlang der Längsseiten (12) aufweisen, mittels welchen die Module (40, 50) vorteilhaft korrespondierend zu den anatomischen Verhältnissen mit den Füßen (94) und Kniegelenken (93) des bettpflichtigen Patienten (90) in Wirkverbindung bringbar sind, wobei die Feststellmittel (41, 51) in Querrichtung des Bettes (10) variabel einstellbar sind.

6. Rehabilitationsmechanismus (30) nach einem der vorherigen Ansprüche, **dadurch gekennzeichnet, dass** dieser reversibel lösbar am Bett (10), insbesondere einem herkömmlichen Krankenhausbett, festsetzbar ist.

7. Rehabilitationsmechanismus (30) nach einem der vorherigen Ansprüche, **dadurch gekennzeichnet, dass** dieser als Modul vom Bett (10), insbesondere einem herkömmlichen Krankenhausbett, abnehmbar und/oder unter dem Bett (10) verstaubar ist.

8. Rehabilitationsmechanismus (30) nach einem der vorherigen Ansprüche, **dadurch gekennzeichnet, dass** das Fußmodul (40) ähnlich einem Fitness-Stepper mit Trittflächen (42) aufgebaut ist.

9. Rehabilitationsmechanismus (30) nach einem der vorherigen Ansprüche, **dadurch gekennzeichnet, dass** das Fußmodul (40) einen Verstellhebel (44) aufweist, mit dem eine Distanz zwischen einer Trittfläche (42) und der Fußsohle (95) beispielsweise feineingestellt werden kann.

10. Rehabilitationsmechanismus (30) nach einem der vorherigen Ansprüche, **dadurch gekennzeichnet, dass** dieser mindestens einen Sensor (F, EMG) umfasst, mittels welchem beim Vollzug planmäßig automatisierter Rehabilitationsbewegungen eine Quantifizierung etwaiger Eigenleistungen bettpflichtiger Patienten (90)
- über die Messung von Druckkräften (F) an den Fußsohlen (95) des Patienten (90)
und/oder
- über die Messung von Druck- und/oder Zug-Kräften (F) am Kniemodul (30)
und/oder
- über die Messung von Muskelaktivität (EMG) und/oder Muskelkräften (F) in den Beinen (92) des Patienten (90)
ermöglicht ist.

11. Rehabilitationsmechanismus (30) nach einem der vorherigen Ansprüche, **dadurch gekennzeichnet, dass** das Steuermodul (60) für die Aussteuerung planmäßig automatisierter Rehabilitationsbewegungen auf Druck- und/oder Zugkraftmesssignale und/oder EMG-Messsignale zurückgreift.

12. Rehabilitationsmechanismus (30) nach einem der vorherigen Ansprüche, **gekennzeichnet durch** ein Biofeedback-Modul, zum Bereitstellen eines visuellen und/oder auditiven Feedbacks für den Patienten (90).

13. Bett (10) für bettpflichtige Patienten (90), wenigstens umfassend einen Rehabilitationsmechanismus (30) nach einem der vorherigen Ansprüche.

14. Bett (10) nach Anspruch 13, weiterhin umfassend
- einen Verstellmechanismus (70) geeignet ausgebildet für die Verstellung des Matratzenrahmens (21) zumindest zwischen einer horizontalen und einer vertikalen Position, aus welcher der Matratzenrahmen (21) jederzeit in die horizontale Position rückführbar ist;
- und einen Stabilisierungsmechanismus (80) geeignet ausgebildet für eine Stabilisierung des bettpflichtigen Patienten (90) bezüglich der Matratze (20), wobei der Stabilisierungsmechanismus (80) eine Hüftfixierung (81) umfasst, mittels welcher die Hüfte des bettpflichtigen Patienten (90) zur Matratze (20) fixierbar ist.

15. Bett (10) nach Anspruch 14, **dadurch gekennzeichnet, dass** der Stabilisierungsmechanismus (80) einen den bettpflichtigen Patienten (90) aufnehmenden Halterungsgeschirr (82), eine mit dem Halterungsgeschirr (82) und dem Matratzenrahmen (21) kopfseitig verbundene Seilwinde (83) und einen Sensor (84) umfasst, mittels welchen die Eigengewichtskraft auf den Beinen (92) des bettpflichtigen Patienten (90) aussteuerbar ist.

## Claims

1. Rehabilitation mechanism (30) which is designed to be suitable for planned, automated rehabilitation of at least the joints, muscles and tendons of the legs (92) of a bedridden patient (90), at least comprising:
- a foot module (40) which can be operatively connected to the feet (94) of the bedridden patient (90),
- a knee module (50) which can be operatively connected to the knee joints (93) of the bedridden patient (90), and
- a control module (60) for controlling planned rehabilitation movements at least of the joints, muscles and tendons of the legs (92) of the bedridden patient (90) by means of the foot module (40) and/or knee module (50);
**characterized in that**
- the knee module (50) is designed to control a planned supporting force on the knee joints (93) of the patient (90);
- and **in that** at least the knee module (50) is designed as a module
- which can be arranged between patient (90) and mattress (20),
- is supported directly on a bed frame (11) or mattress frame (21), and
- can be fastened to both sides of the longitudinal sides (12) of the bed (10) .

2. Rehabilitation mechanism (30) according to Claim 1, **characterized in that** the rehabilitation movement is a walking movement, stepping movement and/or a movement simulating the climbing of stairs.

3. Rehabilitation mechanism (30) according to Claim 1 or 2, **characterized in that**, in addition to the knee module (50), the foot module (40) is also designed as a module which can be arranged above the mattress (20) and is supported directly or indirectly on a bed frame (11) or mattress frame (21).

4. Rehabilitation mechanism (30) according to one of Claims 1 to 3, **characterized by** two guide rails (31), each one of which can be mounted on longitudinal sides (12) of a bed frame (11) or mattress frame (21).

5. Rehabilitation mechanism (30) according to Claim 4, **characterized in that** the foot module (40) and also the knee module (50) have suitable securing means (41, 51) for variable fastenability along the longitudinal sides (12), by means of which the modules (40, 50) can be operatively connected to the feet (94) and knee joints (93) of the bedridden patient (90), advantageously in a manner corresponding to the anatomical conditions, wherein the securing means (41, 51) are variably adjustable in the transverse direction of the bed (10).

6. Rehabilitation mechanism (30) according to one of the preceding claims, **characterized in that** it can be fastened in a reversible and releasable manner to the bed (10), in particular to a conventional sickbed.

7. Rehabilitation mechanism (30) according to one of the preceding claims, **characterized in that** it is detachable as a module from the bed (10), in particular a conventional sickbed, and/or can be stowed as a module under the bed (10).

8. Rehabilitation mechanism (30) according to one of the preceding claims, **characterized in that** the foot module (40) is constructed similarly to a fitness stepper having tread surfaces (42).

9. Rehabilitation mechanism (30) according to one of the preceding claims, **characterized in that** the foot module (40) has an adjusting lever (44) by means of which a distance between a tread surface (42) and the sole (95) of the foot can be finely adjusted, for example.

10. Rehabilitation mechanism (30) according to one of the preceding claims, **characterized in that** it comprises at least one sensor (F, EMG) by means of which any spontaneous efforts made by bedridden patients (90) during the execution of planned, automated rehabilitation movements can be quantified
- by measuring compressive forces (F) on the soles (95) of the feet of the patient (90)
and/or
- by measuring compressive and/or tensile forces (F) at the knee module (30)
and/or
- by measuring muscle activity (EMG) and/or muscle forces (F) in the legs (92) of the patient (90).

11. Rehabilitation mechanism (30) according to one of the preceding claims, **characterized in that** the control module (60) accesses compressive and/or tensile force measurement signals and/or EMG signals in order to control planned, automated rehabilitation moovements.

12. Rehabilitation mechanism (30) according to one of the preceding claims, **characterized by** a biofeedback module for providing visual and/or auditory feedback for the patient (90).

13. Bed (10) for bedridden patients (90), at least comprising a rehabilitation mechanism (30) according to one of the preceding claims.

14. Bed (10) according to Claim 13, further comprising
- an adjusting mechanism (70) suitably designed for adjusting the mattress frame (21) at least between a horizontal position and a vertical position, from which the mattress frame (21) can be returned to the horizontal position at any time;
- and a stabilizing mechanism (80) suitably designed for stabilizing the bedridden patient (90) with respect to the mattress (20), wherein the stabilizing mechanism (80) comprises a waist fixing element (81) by means of which the waist of the bedridden patient (90) can be fixed to the mattress (20).

15. Bed (10) according to Claim 14, **characterized in that** the stabilizing mechanism (80) comprises a support harness (82) for receiving the bedridden patient (90), a cable winch (83) attached at the head end to the support harness (82) and to the mattress frame (21), and a sensor (84) by means of which the inherent weight force on the legs (92) of the bedridden patient (90) can be controlled.

## Revendications

1. Mécanisme de rééducation (30), réalisé de manière appropriée pour une rééducation planifiée et automatisée au moins des articulations, des muscles et des tendons des jambes (92) d'un patient alité (90), comportant au moins
- un module pour pieds (40) pouvant être amené à coopérer avec les pieds (94) du patient alité (90),
- un module pour genoux (50) pouvant être amené à coopérer avec les articulations de genou (93) du patient alité (90), et
- un module de commande (60) servant à commander des mouvements de rééducation planifiés au moins des articulations, des muscles et des tendons des jambes (92) du patient alité (90) au moyen du module pour pieds (40) et/ou du module pour genoux (50) ; **caractérisé**
- **en ce que** le module pour genoux (50) est conçu pour commander une force d'assistance planifiée sur les articulations de genou (93) du patient (90) ;
- et **en ce qu'**au moins le module pour genoux (50) est conçu comme un module
- pouvant être disposé entre le patient (90) et le matelas (20),
- s'appuyant directement sur un cadre de lit (11) ou de matelas (21) et
- pouvant être fixé de part et d'autre des côtés longitudinaux (12) du lit (10).

2. Mécanisme de rééducation (30) selon la revendication 1, **caractérisé en ce que** le mouvement de rééducation est un mouvement de marche, un mouvement de pas et/ou un mouvement simulant une montée d'escalier.

3. Mécanisme de rééducation (30) selon la revendication 1 ou 2, **caractérisé en ce qu'**en plus du module pour genoux (50), le module pour pieds (40) est également conçu comme un module pouvant être disposé au-dessus du matelas (20) et s'appuyant directement ou indirectement sur un cadre de lit (11) ou de matelas (21).

4. Mécanisme de rééducation (30) selon l'une quelconque des revendications précédentes 1 à 3, **caractérisé par** deux rails de guidage (31), parmi lesquels chacun peut être monté sur des côtés longitudinaux (12) d'un cadre de lit (11) ou de matelas (21).

5. Mécanisme de rééducation (30) selon la revendication 4, **caractérisé en ce que** le module pour pieds (40) ainsi que le module pour genoux (50) comprennent des moyens de blocage (41, 51) appropriés permettant de les fixer de manière variable le long des côtés longitudinaux (12), moyens de blocage au moyen desquels les modules (40, 50) peuvent être amenés à coopérer avantageusement, de manière correspondante aux rapports anatomiques, avec les pieds (94) et les articulations de genou (93) du patient alité (90), les moyens de blocage (41, 51) étant réglables de manière variable dans la direction transversale du lit (10).

6. Mécanisme de rééducation (30) selon l'une quelconque des revendications précédentes, **caractérisé en ce que** celui-ci peut être fixé de manière réversible et amovible au lit (10), en particulier à un lit d'hôpital classique.

7. Mécanisme de rééducation (30) selon l'une quelconque des revendications précédentes, **caractérisé en ce que** celui-ci peut, en tant que module, être retiré du lit (10), en particulier d'un lit d'hôpital classique, et/ou être rangé sous le lit (10).

8. Mécanisme de rééducation (30) selon l'une quelconque des revendications précédentes, **caractérisé en ce que** le module pour pieds (40) est conçu de manière à présenter des surfaces de marche (42), de manière similaire à un escalier mécanique d'exercice.

9. Mécanisme de rééducation (30) selon l'une quelconque des revendications précédentes, **caractérisé en ce que** le module pour pieds (40) comprend un levier de réglage (44) à l'aide duquel une distance entre une surface de marche (42) et la plante du pied (95) peut être par exemple réglée précisément.

10. Mécanisme de rééducation (30) selon l'une quelconque des revendications précédentes, **caractérisé en ce que** celui-ci comporte au moins un capteur (F, EMG) au moyen duquel, lors de l'exécution de mouvements de rééducation planifiés et automatisés, une quantification de performances propres éventuelles de patients alités (90) est rendue possible
- par le biais de la mesure de forces de compression (F) sur les plantes de pied (95) du patient (90)
et/ou
- par le biais de la mesure de forces de compression et/ou de traction (F) sur le module pour genoux (30)
et/ou
- par le biais de la mesure de l'activité musculaire (EMG) et/ou de forces musculaires (F) dans les jambes (92) du patient (90).

11. Mécanisme de rééducation (30) selon l'une quelconque des revendications précédentes, **caractérisé en ce que** le module de commande (60) servant à la commande de mouvements de rééducation planifiés et automatisés a recours à des signaux de mesure de force de compression et/ou de traction et/ou à des signaux de mesure d'EMG.

12. Module de rééducation (30) selon l'une quelconque des revendications précédentes, **caractérisé par** un module de rétroaction biologique, permettant de fournir une rétroaction visuelle et/ou sonore au patient (90).

13. Lit (10) pour patients alités (90), comportant au moins un mécanisme de rééducation (30) selon l'une quelconque des revendications précédentes.

14. Lit (10) selon la revendication 13, comportant en outre
- un mécanisme de réglage (70) réalisé de manière appropriée pour le réglage du cadre de matelas (21) au moins entre une position horizontale et une position verticale, à partir de laquelle le cadre de matelas (21) peut être ramené à tout moment à la position horizontale ;
- et un mécanisme de stabilisation (80) réalisé de manière appropriée pour une stabilisation du patient alité (90) par rapport au matelas (20), le mécanisme de stabilisation (80) comportant un dispositif de fixation de hanche (81), au moyen duquel la hanche du patient alité (90) peut être fixée par rapport au matelas (20).

15. Lit (10) selon la revendication 14, **caractérisé en ce que** le mécanisme de stabilisation (80) comporte un harnais de retenue (82) recevant le patient alité (90), un treuil (83) relié côté tête au harnais de retenue (82) et au cadre de matelas (21) et un capteur (84) au moyen duquel le poids propre exercé sur les jambes (92) du patient alité (90) peut être commandé.
